# EUROPEAN PATENT APPLICATION

(11) **EP 4 102 881 A1**
(43) Date of publication of application: **14.12.2022**
(21) Application number: 20917355.8
(22) Date of filing: 04.02.2020
(51) Int. Cl.: H04W 24/10, H04W 72/04

(54) **TERMINAL, WIRELESS COMMUNICATION METHOD, AND BASE STATION**

(71) Applicant: NTT DOCOMO, INC., Chiyoda-Ku Tokyo 100-6150 (JP)
(72) Inventor: MATSUMURA, Yuki, Tokyo 100-6150 (JP); NAGATA, Satoshi, Tokyo 100-6150 (JP); GUO, Shaozhen, Beijing 100190 (CN); WANG, Jing, Beijing 100190 (CN); HOU, Xiaolin, Beijing 100190 (CN)
(74) Representative: Hoffmann Eitle
(86) International application number: PCT/JP2020/004156
(87) International publication number: WO 2021/156944

(57) **Abstract**

A terminal according to an aspect of the present disclosure includes: a reception section that receives at least one configuration for measurement and reporting of channel state information (CSI) for a plurality of transmission/reception points; and a control section that performs measurement and reporting of the CSI on the basis of the configuration. According to an aspect of the present disclosure, it is possible to appropriately measure and report CSI for multi-panels/TRPs.

## Description

### Technical Field

The present disclosure relates to a terminal, a radio communication method, and a base station in next-generation mobile communication systems.

### Background Art

In a universal mobile telecommunications system (UMTS) network, specifications of long term evolution (LTE) have been drafted for the purpose of further increasing a data rate, providing low latency, and the like (see Non Patent Literature 1). Further, the specifications of LTE-Advanced (third generation partnership project (3GPP) Release. (Rel.) 10 to 14) have been drafted for the purpose of further increasing capacity and advancement of LTE (3GPP Rel. 8 and 9).

Successor systems to LTE (for example, also referred to as 5th generation mobile communication system (5G), 5G+ (plus), New Radio (NR), or 3GPP Rel. 15 or later) are also being studied.

### Citation List

### Non Patent Literature

Non Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

In a future radio communication system (for example, NR), it is considered that a user terminal (user equipment (UE)) controls transmission/reception processing on the basis of information regarding quasi-co-location (QCL).

In addition, in NR, studies are underway to allow one or more transmission/reception points (TRPs) (multi-TRPs) to perform DL transmission (for example, PDSCH transmission) to the UE using one or more panels (multi-panels).

However, since the multi-panel/TRP is not considered in the NR specification so far, it is not clear how to measure and report CSI when the multi-panel/TRP is used. When the measurement and reporting of CSI are not appropriately performed, there is a possibility that system performance deteriorates such as a reduction in throughput.

Therefore, an object of the present disclosure is to provide a terminal, a radio communication method, and a base station that appropriately measure and report CSI for multi-panels/TRPs.

### Solution to Problem

A terminal according to an aspect of the present disclosure includes: a reception section that receives at least one configuration for measurement and reporting of channel state information (CSI) for a plurality of transmission/reception points; and a control section that performs measurement and reporting of the CSI on the basis of the configuration.

### Advantageous Effects of Invention

According to an aspect of the present disclosure, it is possible to appropriately measure and report CSI for multi-panels/TRPs.

### Brief Description of Drawings

Fig. 1 is a diagram illustrating an example of CSI report configuration in Rel. 15 NR.
Figs. 2A to 2D are diagrams illustrating an example of PDSCH transmission using multi-TRPs.
Fig. 3 is a diagram illustrating an example of CSI report configuration according to Embodiment 1.
Fig. 4 is a diagram illustrating a first example of a structure of CSI report configuration.
Fig. 5 is a diagram illustrating a second example of a structure of CSI report configuration.
Fig. 6 is a diagram illustrating a third example of a structure of CSI report configuration.
Fig. 7 is a diagram illustrating an example of CSI report configuration according to Interference Hypothesis Association 1 of Embodiment 1-2.
Fig. 8 is a diagram illustrating an example of a configuration of CSI report #1 for TRP #1 according to Interference Hypothesis Association 1 of Embodiment 1-2.
Fig. 9 is a diagram illustrating an example of a configuration of CSI report #2 for TRP #2 according to Interference Hypothesis Association 1 of Embodiment 1-2.
Figs. 10A and 10B are diagrams illustrating an example of CSI report configuration according to Interference Hypothesis Association 2 of Embodiment 1-2.
Fig. 11 is a diagram illustrating an example of a CSI field according to Interference Hypothesis Association 2 of Embodiment 1-2.
Fig. 12 is a diagram illustrating another example of a CSI field according to Interference Hypothesis Association 2 of Embodiment 1-2.
Fig. 13 is a diagram illustrating an example of a configuration of CSI report #1 for TRP #1 according to Interference Hypothesis Association 2 of Embodiment 1-2.
Fig. 14 is a diagram illustrating an example of a configuration of CSI report #2 for TRP #2 according to Interference Hypothesis Association 2 of Embodiment 1-2.
Fig. 15 is a diagram illustrating an example of CSI report configuration according to Embodiment 2-1.
Fig. 16 is a diagram illustrating an example of CSI report configuration according to Interference Hypothesis Association 1 of Embodiment 2-2.
Fig. 17 is a diagram illustrating an example of a CSI field according to Interference Hypothesis Association 1 of Embodiment 2-2.
Fig. 18 is a diagram illustrating another example of a CSI field according to Interference Hypothesis Association 1 of Embodiment 2-2.
Fig. 19 is a diagram illustrating an example of a configuration of CSI report #1 for Interference Hypothesis #1 according to Interference Hypothesis Association 1 of Embodiment 2-2.
Fig. 20 is a diagram illustrating an example of a configuration of CSI report #2 for Interference Hypothesis #2 according to Interference Hypothesis Association 1 of Embodiment 2-2.
Fig. 21 is a diagram illustrating an example of CSI report configuration according to Interference Hypothesis Association 1 of Embodiment 2-2.
Fig. 22 is a diagram illustrating an example of a configuration for Interference Hypothesis #1 among configurations of CSI report #1 according to Interference Hypothesis Association 2 of Embodiment 2-2.
Fig. 23 is a diagram illustrating an example of a configuration for Interference Hypothesis #2 among configurations of CSI report #1 according to Interference Hypothesis Association 2 of Embodiment 2-2.
Fig. 24 is a diagram illustrating an example of a schematic configuration of a radio communication system according to one embodiment.
Fig. 25 is a diagram illustrating an example of a configuration of a base station according to one embodiment.
Fig. 26 is a diagram illustrating an example of a configuration of a user terminal according to one embodiment.
Fig. 27 is a diagram illustrating an example of a hardware configuration of a base station and a user terminal according to one embodiment.

### Description of Embodiments

### (CSI report (or CSI reporting))

In Rel. 15 NR, a terminal (also referred to as a user terminal, user equipment (UE), or the like) generates (or determines, calculates, estimates, measures, or the like) channel state information (CSI) based on a reference signal (RS) (or the resource for the RS), and transmits (or reports, feeds back, or the like) the generated CSI to a network (for example, a base station). The CSI may be transmitted to the base station by using, for example, an uplink control channel (for example, physical uplink control channel (PUCCH)) or an uplink shared channel (physical uplink shared channel (PUSCH))).

It is sufficient if the RS used for generation of the CSI is, for example, at least one of a channel state information reference signal (CSI-RS), a synchronization signal/broadcast channel (synchronization signal/physical broadcast channel) (SS/PBCH) block, a synchronization signal (SS), a demodulation reference signal (DMRS), and the like.

The CSI-RS may include at least one of a non zero power (NZP) CSI-RS and CSI-interference management (CSI-IM). The SS/PBCH block is a block including an SS and a PBCH (and a corresponding DMRS), and may be referred to as an SS block (SSB) or the like. Further, the SS may include at least one of a primary synchronization signal (PSS) and a secondary synchronization signal (SSS).

The CSI may include at least one parameter (CSI parameter) of a channel quality indicator (CQI), a precoding matrix indicator (PMI), a CSI-RS resource indicator (CRI), an SS/PBCH block resource indicator (SS/PBCH block indicator)(SSBRI), a layer indicator (LI), a rank indicator (RI), layer 1 reference signal received power (L1-RSRP), L1-reference signal received quality (RSRQ), signal-to-noise and interference ratio or signal to interference plus noise ratio (L1-SINR), signal to noise ratio (L1-SNR), and the like.

The UE may receive information (report configuration information) related to the CSI report and control the CSI report based on the report configuration information. The report configuration information may be, for example, a radio resource control (RRC) information element (IE) "CSI-ReportConfig". Note that, in the present disclosure, the RRC IE may be rephrased as an RRC parameter, a higher layer parameter, or the like.

The report configuration information (for example, RRC IE "CSI-ReportConfig") may include, for example, at least one of the following.
- Information regarding the type of CSI report (report type information, for example, RRC IE "reportConfigType")
- Information regarding one or more quantities of CSI (one or more CSI parameters) to be reported (report quantity information, for example, RRC IE "reportQuantity")
- Information regarding an RS resource used to generate the quantity (the CSI parameter) (resource information, for example, RRC IE "CSI-ResourceConfigId")
- Information regarding a frequency domain to be subjected to CSI reporting (frequency domain information, for example, RRC IE "reportFreqConfiguration")

For example, the report type information may indicate a periodic CSI (P-CSI) report, an aperiodic CSI (A-CSI) report, or a semi-permanent (semi-persistent) CSI (SP-CSI) report.

In addition, the report quantity information may specify at least one combination of the CSI parameters (for example, CRI, RI, PMI, CQI, LI, L1-RSRP, and the like).

Further, the resource information may be an ID of an RS resource. The RS resource may include, for example, a non zero power CSI-RS resource or SSB and a CSI-IM resource (for example, a zero power CSI-RS resource).

In addition, the frequency domain information may indicate frequency granularity of CSI reporting. The frequency granularity may include, for example, a wide band and a subband. The wide band is the entire CSI reporting band. The wide band may be, for example, an entire (certain) carrier (component carrier (CC), cell, serving cell) or an entire bandwidth part (BWP) in a certain carrier. The wide band may be rephrased as a CSI reporting band, an entire CSI reporting band, or the like.

In addition, the subband is a part in the wide band, and may include one or more resource blocks (RBs) or physical resource blocks (PRBs)). The size of the subband may be determined according to the size of the BWP (the number of PRBs).

The frequency domain information may indicate whose PMI to report: the wide band or the subband (the frequency domain information may include, for example, an RRC IE "pmi-FormatIndicator" used to determine either a wide band PMI report or a subband PMI report). The UE may determine the frequency granularity of the CSI report (that is, either the wide band PMI report or the subband PMI report) based on at least one of the report quantity information and the frequency domain information.

When the wide band PMI report is configured (determined), one wide band PMI may be reported for the entire CSI reporting band. On the other hand, when the subband PMI report is configured, a single wide band indication (single wideband indication) i₁ may be reported for the entire CSI reporting band, and one subband indication i₂ (for example, a subband indication of each subband) of each of one or more subbands within the entire CSI reporting may be reported.

The UE performs channel estimation by using the received RS, and estimates a channel matrix H. The UE feeds back an index (PMI) that is determined based on the estimated channel matrix.

The PMI may indicate a precoder matrix (also simply referred to as a precoder) that the UE considers appropriate for downlink (DL) transmission to the UE. Each value of the PMI may correspond to one precoder matrix. The set of values of the PMI may correspond to a set of different precoder matrices called a precoder codebook (also simply referred to as a codebook).

In the space domain, the CSI report may include one or more types of CSI. For example, the CSI may include at least one of a first type (Type 1 CSI) used for selection of a single beam and a second type (Type 2 CSI) used for selection of multiple beams. The single beam may be rephrased as a single layer, and the multiple beams may be rephrased as a plurality of beams. Further, Type 1 CSI may not assume multi-user multiple input multiple output (MIMO), and Type 2 CSI may assume multi-user MIMO.

The codebook may include a Type 1 CSI codebook (also referred to as Type 1 codebook or the like) and a Type 2 CSI codebook (also referred to as Type 2 codebook or the like). In addition, Type 1 CSI may include Type 1 single panel CSI and Type 1 multi-panel CSI, and different codebooks (Type 1 single panel codebook, Type 1 multi-panel codebook) may be specified.

In the present disclosure, Type 1 and Type I may be replaced with each other. In the present disclosure, Type 2 and Type II may be replaced with each other.

An uplink control information (UCI) type may include at least one of hybrid automatic repeat request acknowledgement (HARQ-ACK), a scheduling request (SR), and the CSI. The UCI may be carried by a PUCCH or may be carried by a PUSCH.

In Rel. 15 NR, the UCI can include one CSI part for wide band PMI feedback. CSI report #n includes PMI wide band information if reported.

In Rel. 15 NR, the UCI can include two CSI parts for subband PMI feedback. CSI Part 1 includes wide band PMI information. CSI Part 2 includes one piece of wide band PMI information and several pieces of subband PMI information. CSI Part 1 and CSI Part 2 are separated and encoded.

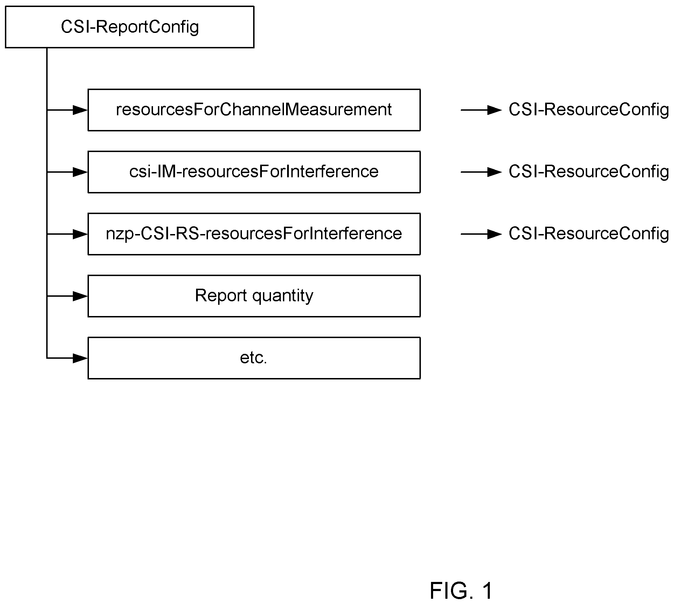

In Rel. 15 NR, the UE is configured with a report setting of N (N ≥ 1) CSI report configurations and a resource setting of M (M ≥ 1) CSI resource configurations by a higher layer. For example, as illustrated in Fig. 1, a CSI report configuration (CSI-ReportConfig) includes a resource setting for channel measurement (resourcesForChannelMeasurement), a CSI-IM resource setting for interference (csi-IM-ResourceForInterference), an NZP-CSI-RS setting for interference (nzp-CSI-RS-ResourceForInterference), a report quantity (reportQuantity), and the like. Each of the resource setting for channel measurement, the CSI-IM resource setting for interference, and the NZP-CSI-RS setting for interference is associated with the CSI resource configuration (CSI-ResourceConfig, CSI-ResourceConfigId). The CSI resource configuration includes a list of CSI-RS resource sets (csi-RS-ResourceSetList, for example, an NZP-CSI-RS resource set or a CSI-IM resource set).

If the interference measurement is performed in the CSI-IM, each CSI-RS resource for channel measurement is associated with the CSI-IM resource for each resource in the order of the CSI-RS resource and the CSI-IM resource in the corresponding resource set. The number of CSI-RS resources for channel measurement is equal to the number of CSI-IM resources.

That is, for interference measurement based on the CSI-IM, a channel measurement resource (CMR) and an interference measurement resource (IMR) are in a one-to-one mapping.

When the UE is configured with a CSI report configuration with a report quantity (higher layer parameter reportQuantity) set to 'cri-RSRP', 'cri-RI-PMI-CQI', 'cri-RI-i1', 'cri-RI-i1-CQI', 'cri-RI-CQI', or 'cri-RI-LI-PMI-CQI', and K_{S} (K_{S} > 1) resources are configured in the corresponding resource set for channel measurement, the UE derives CSI parameters other than CRI subject to the reported CRI. CSI k (k ≥ 0) corresponds to the configured (k + 1)th entry of the associated NZP-CSI-RS resource (nzp-CSI-RSResource) in the corresponding NZP-CSI-RS resource set (nzp-CSI-RS-ResourceSet) for channel measurement and the configured (k + 1)th entry of the associated CSI-IM resource (csi-IM-Resource) in the CSI-IM resource set (csi-IM-ResourceSet) if configured.

That is, CSI k corresponds to the configured (k + 1)th CMR and the configured (k + 1)th IMR.

To enable more dynamic channel/interference hypotheses for NCJT for both FR1 and FR2, evaluation and definition of CSI reporting for transmission of at least one of DL multi-TRPs and multi-panels has been studied.

### (Multi-TRP)

In NR, studies are underway to allow one or more transmission/reception points (TRPs) (multi-TRPs) to perform DL transmission to the UE using one or more panels (multi-panels). In addition, it is considered that the UE performs UL transmission to one or a plurality of TRPs.

Note that a plurality of TRPs may correspond to the same cell identifier (ID) or may correspond to different cell IDs. The cell ID may be a physical cell ID or a virtual cell ID.

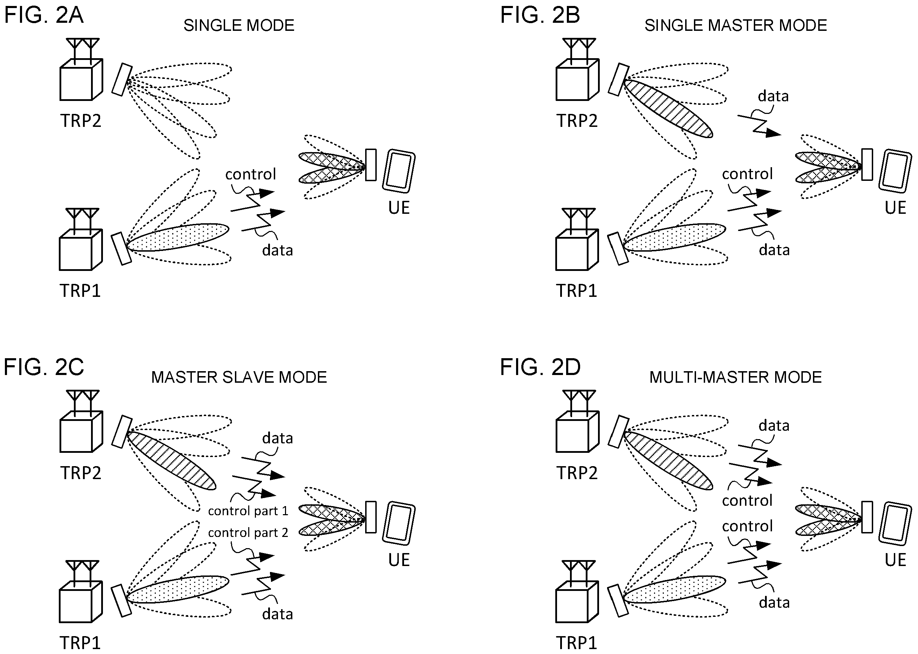

Figs. 2A to 2D are diagrams illustrating an example of a multi-TRP scenario. In these examples, it is assumed that each TRP is capable of transmitting four different beams, but is not limited to this.

Fig. 2A illustrates an example of a case in which only one TRP (TRP1 in this example) among multi-TRPs performs transmission to the UE (which may be referred to as a single mode, a single TRP, or the like). In this case, TRP1 transmits both a control signal (PDCCH) and a data signal (PDSCH) to the UE.

Fig. 2B illustrates an example of a case in which only one TRP (TRP1 in this example) among multi-TRPs transmits a control signal to the UE and the multi-TRPs transmit a data signal (which may be referred to as a single master mode). The UE receives each PDSCH transmitted from the multi-TRPs based on one piece of downlink control information (DCI).

Fig. 2C illustrates an example of a case in which each of multi-TRPs transmits a part of a control signal to the UE and the multi-TRPs transmit a data signal (which may be referred to as a master slave mode). Part 1 of the control signal (DCI) may be transmitted by TRP1, and Part 2 of the control signal (DCI) may be transmitted by TRP2. Part 2 of the control signal may depend on Part 1. The UE receives each PDSCH transmitted from the multi-TRPs based on these parts of the DCI.

Fig. 2D illustrates an example of a case in which multi-TRPs transmit different control signals to the UE and the multi-TRPs transmit a data signal (which may be referred to as a multi-master mode). A first control signal (DCI) may be transmitted by TRP1, and a second control signal (DCI) may be transmitted by TRP2. The UE receives each PDSCH transmitted from the multi-TRPs based on these pieces of the DCI.

In a case where a plurality of PDSCHs (which may be referred to as multiple PDSCHs) from the multi-TRPs as illustrated in Fig. 2B is scheduled using one piece of DCI, the DCI may be referred to as single DCI (S-DCI, single PDCCH). In addition, in a case where a plurality of PDSCHs from the multi-TRPs as illustrated in Fig. 2D is scheduled using a plurality of pieces of DCI, the plurality of pieces of DCI may be referred to as multi-DCI (M-DCI, multiple PDCCHs).

Different codewords (CW) and different layers may be transmitted from each TRP of the multi-TRPs. As a form of multi-TRP transmission, non-coherent joint transmission (NCJT) has been studied.

In the NCJT, for example, TRP1 performs modulation mapping on a first codeword, performs layer mapping on a first number of layers (for example, two layers) to transmit a first PDSCH by using first precoding. In addition, TRP2 performs modulation mapping on a second codeword, performs layer mapping on a second number of layers (for example, two layers) to transmit a second PDSCH by using second precoding.

Note that a plurality of PDSCHs (multiple PDSCHs) subjected to the NCJT may be defined as partially or completely overlapping with respect to at least one of time and frequency domains. That is, at least one of time and frequency resources of the first PDSCH from the first TRP and the second PDSCH from the second TRP may overlap.

It may be assumed that the first PDSCH and the second PDSCH are not in a quasi-co-location (QCL) relationship (not quasi-co-located). The reception of the multiple PDSCHs may be replaced with simultaneous reception of a PDSCH that is not of a given QCL type (for example, QCL type D).

In URLLC for multi-TRPs, support of PDSCH (transport block (TB) or codeword (CW)) repetition across the multi-TRPs has been studied. Support of a repetition scheme (URLLC schemes, e.g., Schemes 1, 2a, 2b, 3 and 4) across multi-TRPs in the frequency domain, the layer (spatial) domain, or the time domain has been studied. In Scheme 1, multiple PDSCHs from multi-TRPs are subjected to space division multiplexing (SDM). In Schemes 2a and 2b, a PDSCH from multi-TRPs is subjected to frequency division multiplexing (FDM). In Scheme 2a, the redundancy version (RV) is the same for multi-TRPs. In Scheme 2b, the RV may be the same or different for multi-TRPs. In Schemes 3 and 4, multiple PDSCHs from multi-TRPs are subjected to time division multiplexing (TDM). In Scheme 3, multiple PDSCHs from multi-TRPs are transmitted in one slot. In Scheme 4, multiple PDSCHs from multi-TRPs are transmitted in different slots.

According to such multi-TRP scenario, more flexible transmission control using a high quality channel is possible.

There is a possibility that the NCJT using multi-TRPs/panels use a high rank. Both single DCI (single PDCCH, e.g., Fig. 2B) and multi-DCI (single PDCCH, e.g., Fig. 2D) may be supported to support ideal and non-ideal backhauls among a plurality of TRPs. For both the single DCI and the multi-DCI, the maximum number of TRPs may be two.

Extension of TCI has been studied for single PDCCH designs (mainly for ideal backhaul). Each TCI code point in the DCI may correspond to one or two TCI states. The TCI field size may be the same as that in Rel. 15.

Extension of DMRS has been studied for single PDCCH designs (mainly for ideal backhaul). The UE may support the below-indicated combinations of layers from the two TRPs instructed by an antenna port field. For a single codeword (CW) and a single user (SU), a combination of the number of layers of TRP1 and TRP2 may be, in a form of "the number of layers of TRP1 + the number of layers of TRP2", any of 1 + 1, 1 + 2, 2 + 1, and 2 + 2. There is no agreement regarding supporting a combination of at least one layer of 1 + 3 and 3 + 1 from two TRPs instructed by the antenna port field, support for a multi-user (MU) case, and support for two CWs. The size of the antenna port field may be the same as that in Rel. 15.

For multiple PDCCH designs (for both ideal backhaul and non-ideal backhaul), the maximum number of CORESETs per PDCCH configuration information (PDCCH-Config) may be increased to five according to UE capability. The maximum number of CORESETs that can be configured with the same TRP may be up to the number reported by the UE capability. The same TRP may be the same higher layer index (for example, CORESET pool index) that is configured for each PDCCH configuration information and, if configured, for each CORESET. The UE capability may include at least three candidate values.

For multiple PDCCH designs (for both ideal backhaul and non-ideal backhaul), depending on the UE capability, the maximum number of resources of at least one of BD and CCE per serving cell and per slot may be increased.

For multi-TRP transmission, the CSI for a plurality of different TRPs is usually different, and therefore, how to measure and report the CSI for the plurality of different TRPs is not clear. For one TRP, the channel/interference hypothesis changes depending on the determination (traffic) of the transmission of surrounding TRPs. Therefore, it is not clear how to measure and report the CSI for a plurality of different interference hypotheses.

Therefore, the present inventors have conceived a method of measuring and reporting the CSI for multi-panels/TRPs.

Embodiments according to the present disclosure will be described below in detail with reference to the drawings. Radio communication methods according to the embodiments may be applied independently, or may be applied in combination.

In the present disclosure, "A/B" and "at least one of A and B" may be replaced with each other.

In the present disclosure, the panel, the uplink (UL) transmission entity, the TRP, the spatial relationship, the control resource set (CORESET), the PDSCH, the codeword, the base station, the antenna port of a signal (for example, the demodulation reference signal (DMRS) port), the antenna port group of a signal (for example, the DMRS port group), the group for multiplexing (for example, code division multiplexing (CDM) group, reference signal group, and CORESET group), the CORESET pool, the CW, the redundancy version (RV), and the layer (MIMO layer, transmission layer, and spatial layer) may be replaced with each other. Further, the panel identifier (ID) and the panel may be replaced with each other. In the present disclosure, the TRP ID and the TRP may be replaced with each other.

In the present disclosure, the NCJT, the NCJT using the multi-TRPs, the multiple PDSCHs using the NCJT, the multiple PDSCHs, the plurality of PDSCHs from the multi-TRPs, and the like may be replaced with each other. Note that the multiple PDSCHs may mean a plurality of PDSCHs in which at least some of time resources (for example, one symbol) overlap, may mean a plurality of PDSCHs in which all of time resources (for example, all symbols) overlap, may mean a plurality of PDSCHs in which all of time resources do not overlap, may mean a plurality of PDSCHs carrying the same TB or the same CW, or may mean a plurality of PDSCHs to which different UE beams (spatial domain reception filter, QCL parameter) are applied.

In the present disclosure, the cell, the CC, the carrier, the BWP, and the band may be replaced with each other.

In the present disclosure, the index, the ID, the indicator, and the resource ID may be replaced with each other.

### (Radio Communication Method)

In the present disclosure, the TRP index, the CORESET pool index (CORESETPoolIndex), the pool index, the group index, the CSI reporting setting group index, the CSI reporting group index, the CSI report configuration index, the CSI reporting setting group index, and the resource setting group index may be replaced with each other.

In the present disclosure, the resource setting for channel measurement, the channel measurement resource, and resourcesForChannelMeasurement may be replaced with each other. In the present disclosure, the CSI-IM resource setting for interference, the CSI-IM-based interference measurement resource, csi-IM-ResourceForInterference, and the interference measurement resource may be replaced with each other. In the present disclosure, the NZP-CSI-RS resource setting for interference, the NZP-CSI-RS-based interference measurement resource, nzp-CSI-RS-ResourcesForInterference, and the interference measurement resource may be replaced with each other.

### <Embodiment 1>

For a plurality of TRPs, a separate configuration of CSI measurement and reporting may be supported. The base station may transmit a separate configuration of CSI measurement and reporting for the plurality of TRPs. The base station may receive (acquire) a CSI report based on the separate configuration of CSI measurement and reporting for the plurality of TRPs.

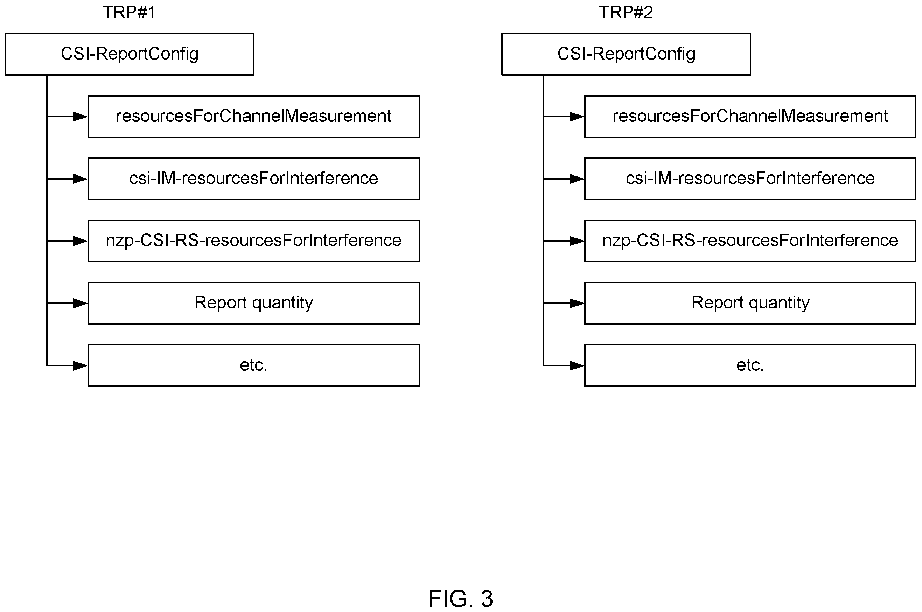

A separate CSI report configuration (CSI-ReportConfig) for the plurality of TRPs may be configured. For example, as illustrated in Fig. 3, the UE may be configured with a CSI report configuration for TRP #1 and a CSI report configuration for TRP #2.

### <<Embodiment 1-1>>

The association between the CSI report configuration and the TRP may be according to one of TRP Associations 1 and 2 below.

### [TRP Association 1]

The association between the CSI report configuration and the TRP may be transparent to the UE (may not be recognized by the UE, or may not be visible to the UE).

### [TRP Association 2]

The association between the CSI report configuration and the TRP may be explicitly instructed to the UE.

The CSI report configuration and the TRP may be associated using at least one of Association Parameters 1 to 3 below.

### [[Association Parameter 1]]

A CSI reporting group index (CSI reporting setting group index) may be introduced. Each CSI report setting may be associated with the CSI reporting group index.

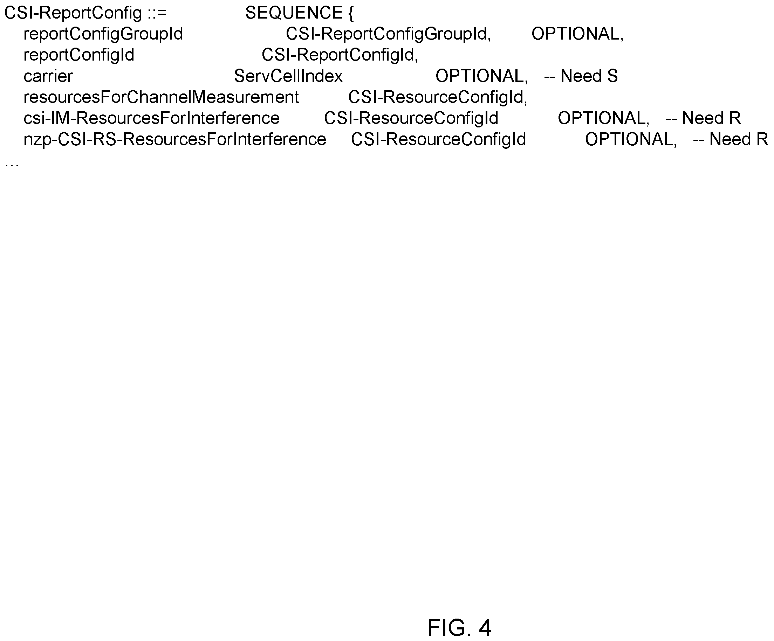

For example, as illustrated in Fig. 4, the CSI report configuration (CSI-ReportConfig) includes the CSI reporting group index (CSI report configuration group index, CSI-ReportConfigGroupId, CSI-ReportSettingGroupId), and may further include at least one of the CSI report configuration index (CSI-ReportConfigId), the resource setting for channel measurement (resourcesForChannelMeasurement), the CSI-IM resource setting for interference (csi-IM-ResourcesForInterference), and the NZP-CSI-RS resource setting for interference (np-CSI-RS-ResourcesForInterference).

### [[Association Parameter 2]]

Each CSI report setting may be associated with the value of the CORESET pool index (CORESETPoolIndex).

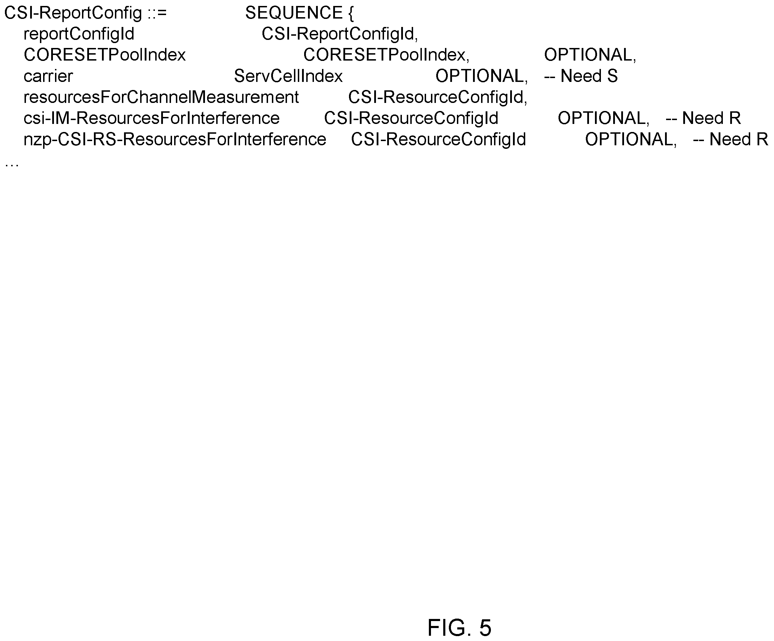

For example, as illustrated in Fig. 5, the CSI report configuration (CSI-ReportConfig) includes the CORESET pool index (CORESETPoolIndex), and may further include at least one of the CSI report configuration index (CSI-ReportConfigId), the resource setting for channel measurement (resourcesForChannelMeasurement), the CSI-IM resource setting for interference (csi-IM-ResourcesForInterference), and the NZP-CSI-RS resource setting for interference (np-CSI-RS-ResourcesForInterference).

### [[Association Parameter 3]]

The PUCCH resource configured for the CSI report setting may be associated with the value of the CORESET pool index or the value of the CSI reporting group index.

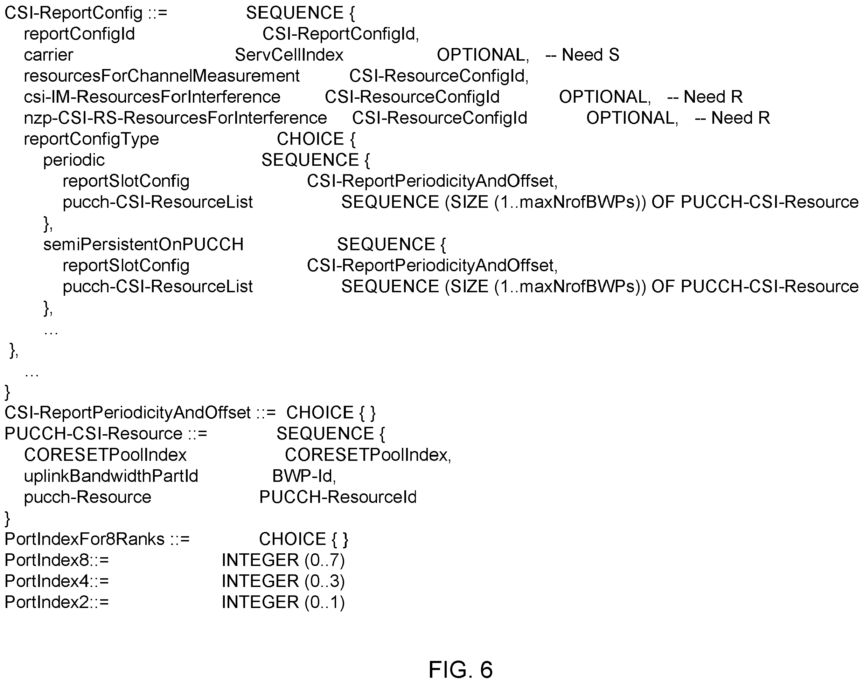

For example, as illustrated in Fig. 6, the CSI report configuration (CSI-ReportConfig) includes the report configuration type (reportConfigType), and may further include at least one of the CSI report configuration index (CSI-ReportConfigId), the resource setting for channel measurement (resourcesForChannelMeasurement), the CSI-IM resource setting for interference (csi-IM-ResourcesForInterference), and the NZP-CSI-RS resource setting for interference (np-CSI-RS-ResourcesForInterference). The report configuration type may include periodic information or semi-persistent information on the PUCCH (semiPersistentOnPUCCH). The information may include the periodicity and offset of the CSI report (CSI-ReportPeriodicityAndOffset). The period and offset of the CSI report may include a PUCCH-CSI resource (PUCCH-CSI-Resource). The PUCCH-CSI resource may include the CORESET pool index (CORESETPoolIndex) or the CSI reporting group index (CSI-ReportConfigGroupId).

### <<Embodiment 1-2>>

For one TRP, at least one rule of Interference Hypothesis Associations 1 and 2 below may be followed to reflect a plurality of different interference hypotheses depending on the determination of transmission of surrounding TRPs.

### [Interference Hypothesis Association 1]

For a plurality of different interference hypotheses, a separate configuration of CSI measurement and reporting may be configured in the UE.

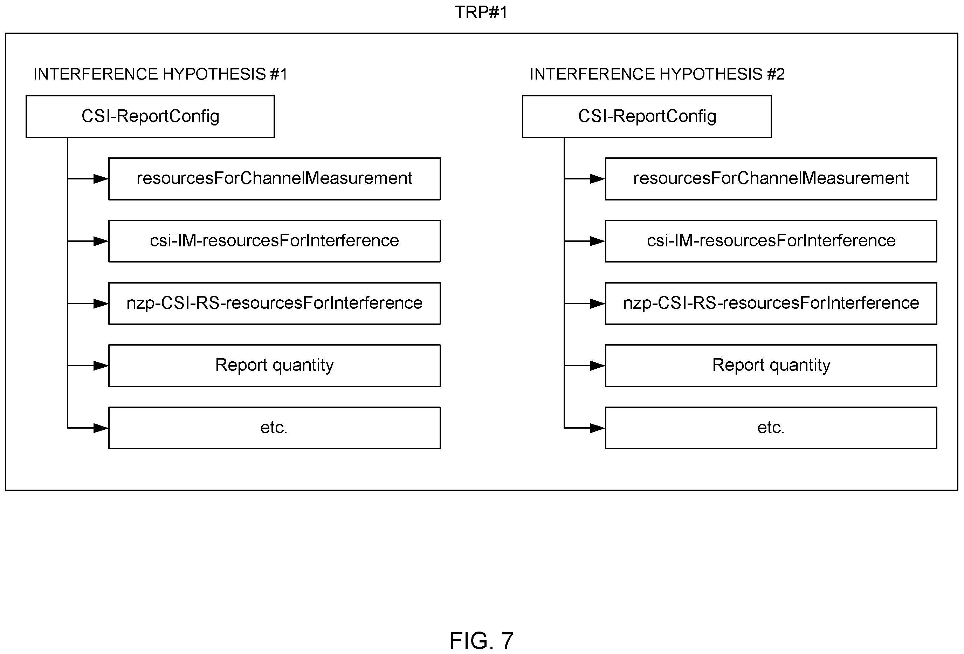

For example, as illustrated in Fig. 7, a plurality of CSI report configuration IDs are respectively associated with a plurality of interference hypotheses in one TRP.

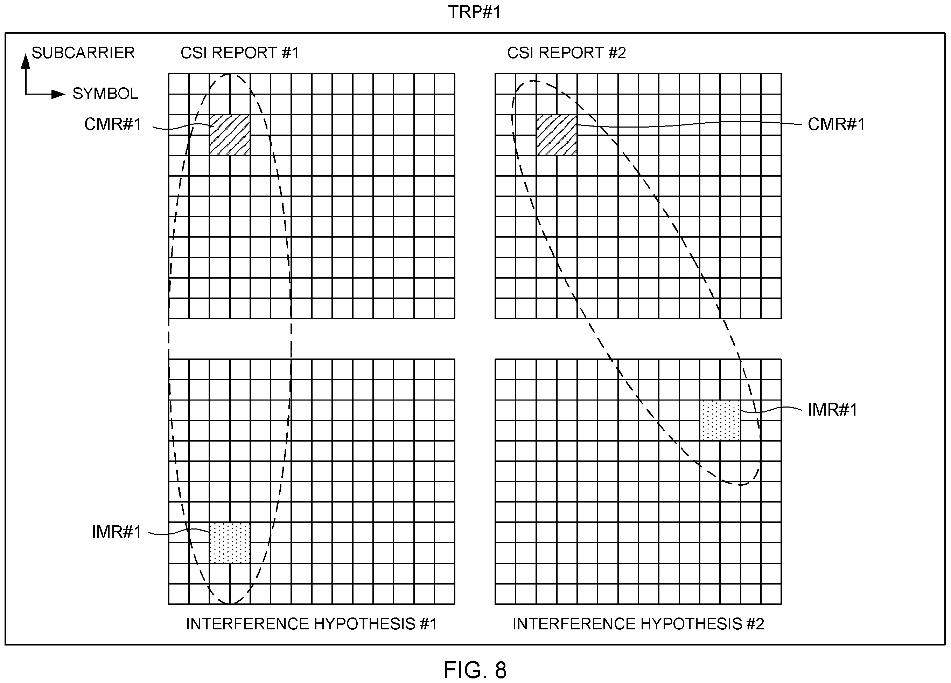

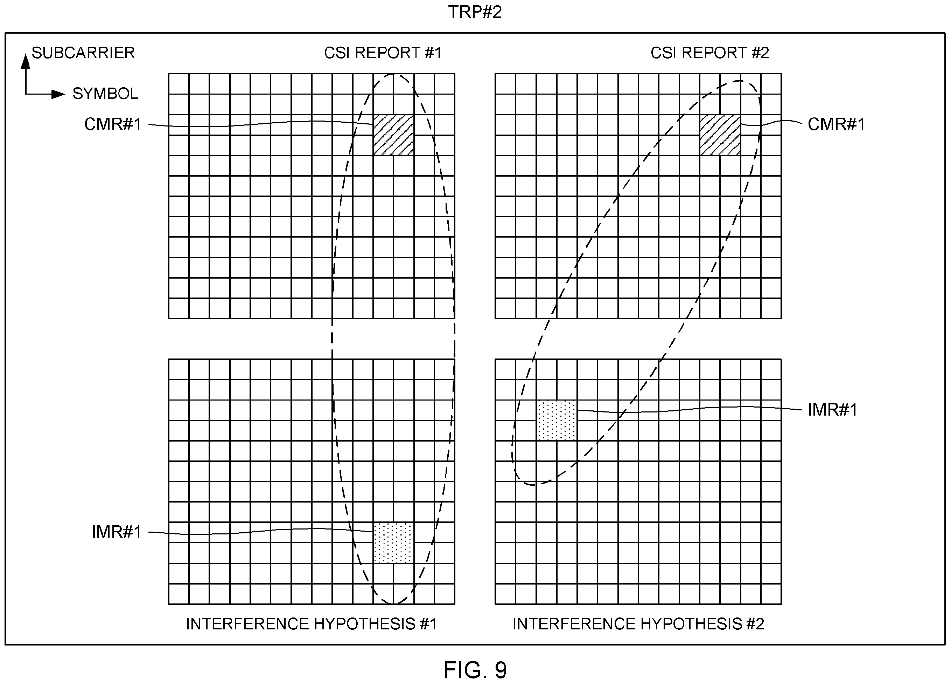

For example, as illustrated in Fig. 8, for TRP #1, CSI report #1 corresponding to Interference Hypothesis #1 is configured, and CSI report #2 corresponding to Interference Hypothesis #2 is configured. Interference Hypothesis #1 includes Channel Measurement Resource (CMR) #1 and Interference Measurement Resource (IMR) #1. Interference Hypothesis #2 includes CMR #2 and IMR #2. For example, as illustrated in Fig. 9, for TRP #2, CSI report #3 corresponding to Interference Hypothesis #3 is configured, and CSI report #4 corresponding to Interference Hypothesis #4 is configured. Interference Hypothesis #3 includes CMR #3 and IMR #3. Interference Hypothesis #4 includes CMR #4 and IMR #4.

### [Interference Hypothesis Association 2]

A joint configuration of CSI measurement and reporting for a plurality of different interference hypotheses may be configured in the UE.

In the CSI report configuration for one TRP, a plurality of resource settings may be configured. One resource setting among the plurality of resource settings may be for channel measurement. Among the plurality of resource settings, a plurality of (M) resource settings may be for interference measurement based on CSI-IM.

In one resource setting, each CSI-RS resource for channel measurement may be associated with a CSI-IM resource for each resource in the order of the CSI-RS resource in the resource set and the CSI-IM resource in the corresponding resource set.

When Ks (Ks > 1) resources are configured in the corresponding resource set for channel measurement, for each resource setting for interference measurement based on CSI-IM, the UE may derive a CSI parameter other than the CRI subject to the reported CRI. CRI l = k + m*K_{S} (0 ≤ k < Ks, 0 ≤ m < M, 0 ≤ l < L (M*K_{S})) may correspond to the configured (k + 1)th entry of the associated NZP-CSI-RS resource setting (nzp-CSI-RSResource) in the corresponding NZP-CSI-RS resource set information (nzp-CSI-RS-ResourceSet) for channel measurement and the (k + 1)th entry of the associated CSI-IM resource setting (csi-IM-Resource) in the corresponding CSI-IM resource set information (csi-IM-ResourceSet) of the (m + 1)th resource setting for interference measurement based on the CSI-IM if configured.

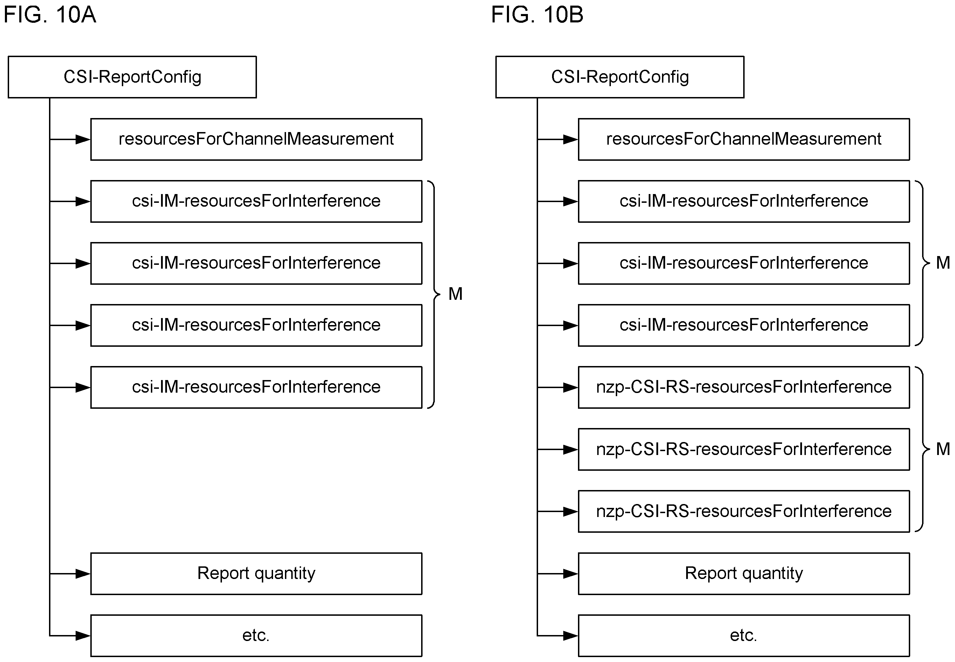

For example, as illustrated in Fig. 10A, a CSI report configuration (CSI-ReportConfig) includes one resource setting for channel measurement (resourcesForChannelMeasurement) and M CSI-IM resource settings for interference (csi-IM-ResourceForInterference). The M CSI-IM resource settings for interference correspond to a plurality of different interference hypotheses.

For example, as illustrated in Fig. 10B, a CSI report configuration (CSI-ReportConfig) includes one resource setting for channel measurement (resourcesForChannelMeasurement) and M resource settings for interference. The M resource settings for interference correspond to a plurality of different interference hypotheses. Each resource setting for interference is at least one of the CSI-IM resource setting for interference (csi-IM-ResourceForInterference) and the NZP-CSI-RS resource setting for interference (nzp-CSI-RS-ResourcesForInterference).

For one CSI report content, the CSI parameter may be mapped in the CSI report according to at least one of Mapping Methods 1 and 2 below.

### [[Mapping Method 1]]

A mapping order of a plurality of different CSI fields may be the same as that in Rel. 15. In the same CSI field (same type of CSI), a plurality of fields may be included, and each field may correspond to one interference hypothesis/resource setting.

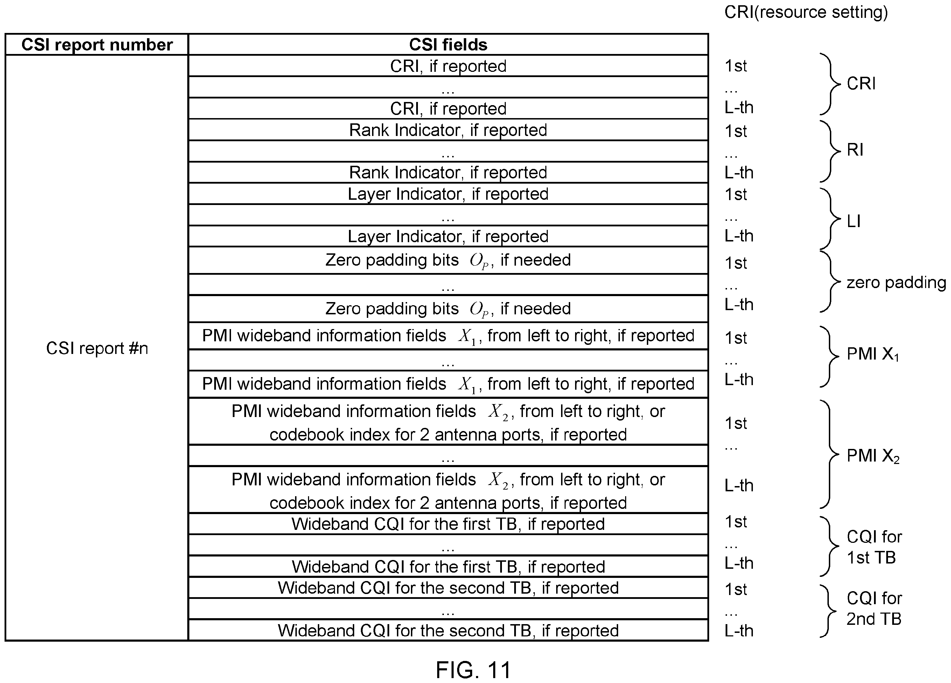

Fig. 11 is a diagram illustrating an example of a CSI field in CSI report #n. In CSI report #n, for one type of CSI, a field corresponding to the first CRI to a field corresponding to the L-th CRI based on the resource setting/interference hypothesis are consecutive.

### [[Mapping Method 2]]

For a given interference hypothesis/resource setting, the mapping order of the plurality of different CSI fields may be the same as in Rel. 15. Over a plurality of different interference hypotheses/resource settings, the mapping order of the CSI may be ascending or descending order of resource setting IDs.

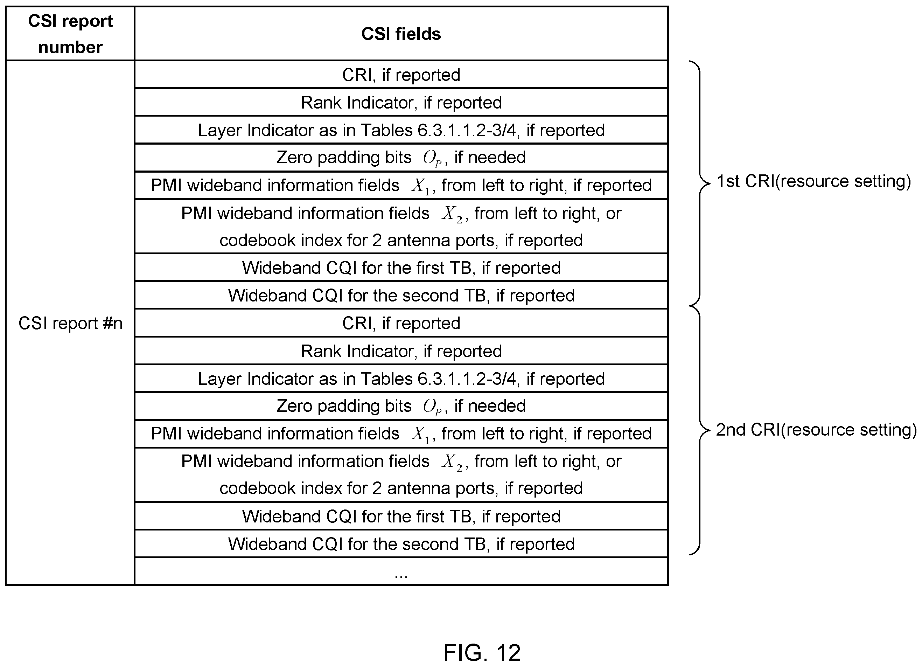

Fig. 12 is a diagram illustrating another example of a CSI field in CSI report #n. In CSI report #n, following the plurality of CSI fields corresponding to the first CRI based on the resource setting/interference hypothesis, a plurality of CSI fields corresponding to the second CRI are mapped, and a plurality of CSI fields corresponding to the L-th CRI are mapped.

Resource setting for interference measurement based on the NZP-CSI-RS may or may not be configured. If configured, the content of Embodiment 1 may be applied to resource settings for interference measurement based on the NZP-CSI-RS.

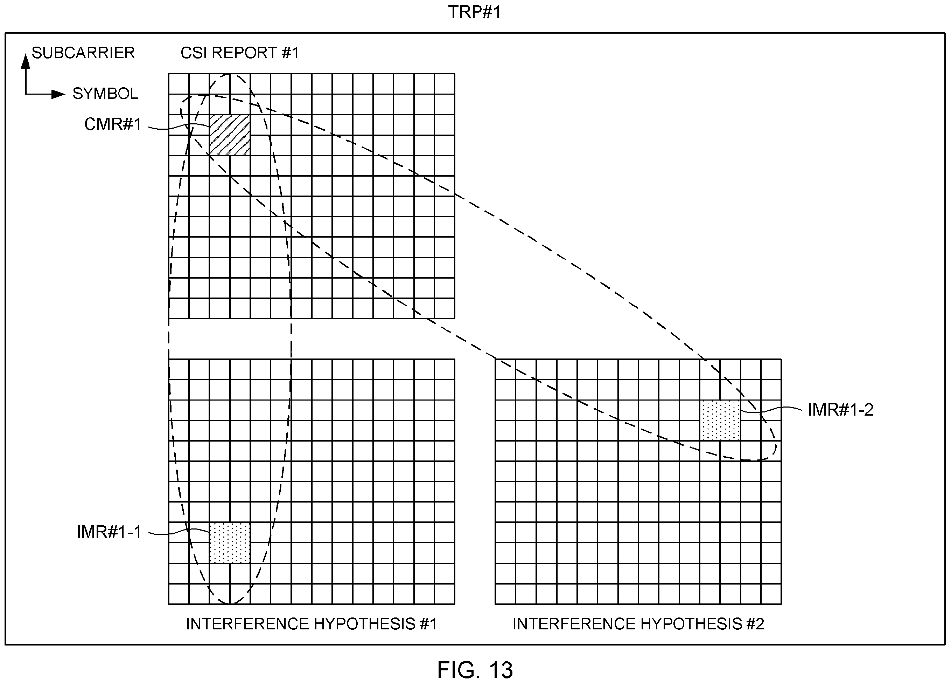

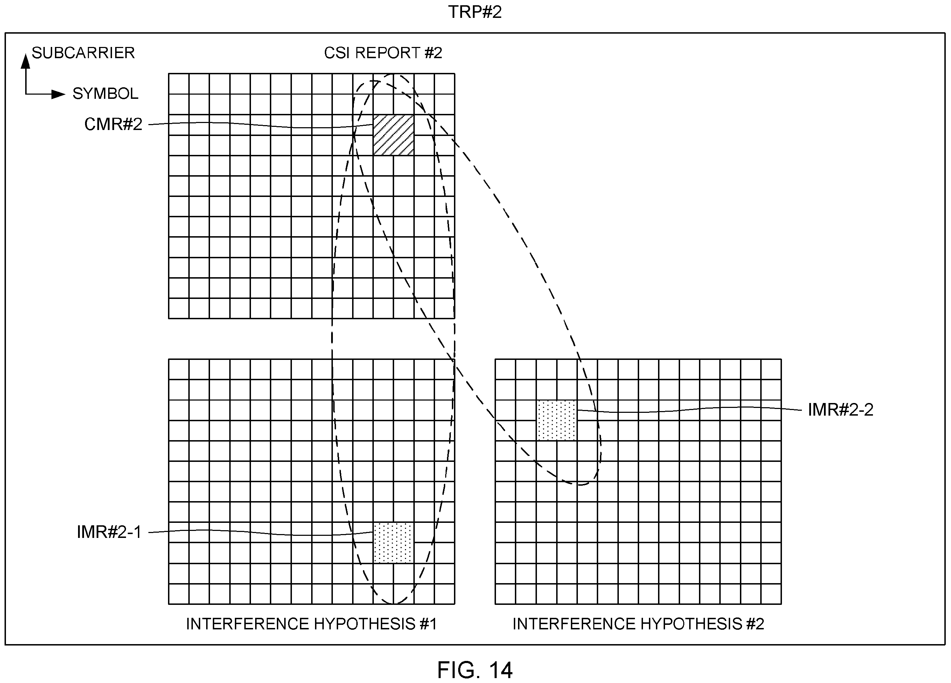

For example, as illustrated in Fig. 13, CSI report #1 corresponding to Interference Hypotheses #1 and #2 is configured for TRP #1. Interference Hypothesis #1 includes CMR #1 and IMR #1-1. Interference Hypothesis #2 includes CMR #1 and IMR #1-2. For example, as illustrated in Fig. 14, CSI report #2 corresponding to Interference Hypotheses #1 and #2 is configured for TRP #2. Interference Hypothesis #1 includes CMR #2 and IMR #2-1. Interference Hypothesis #2 includes CMR #2 and IMR #2-2.

According to Embodiment 1, CSI reporting for multi-TRPs can be appropriately configured.

### <Embodiment 2>

For a plurality of TRPs, a joint configuration of CSI measurement and reporting may be supported. The base station may transmit a joint configuration of CSI measurement and reporting for the plurality of TRPs. The base station may receive (acquire) a CSI report based on the joint configuration of CSI measurement and reporting for the plurality of TRPs.

A joint CSI report configuration (CSI-ReportConfig) for the plurality of TRPs may be configured.

### <<Embodiment 2-1>>

In the CSI report configuration, a plurality of resource setting groups may be configured. Each resource setting group (RSG) may be associated with the TRP. For a resource setting group, at least one of the resource setting group index, the TRP index, and the CORESET pool index may be introduced.

The resource setting group index may be the same as the TRP index. Only two resource setting groups may be supported.

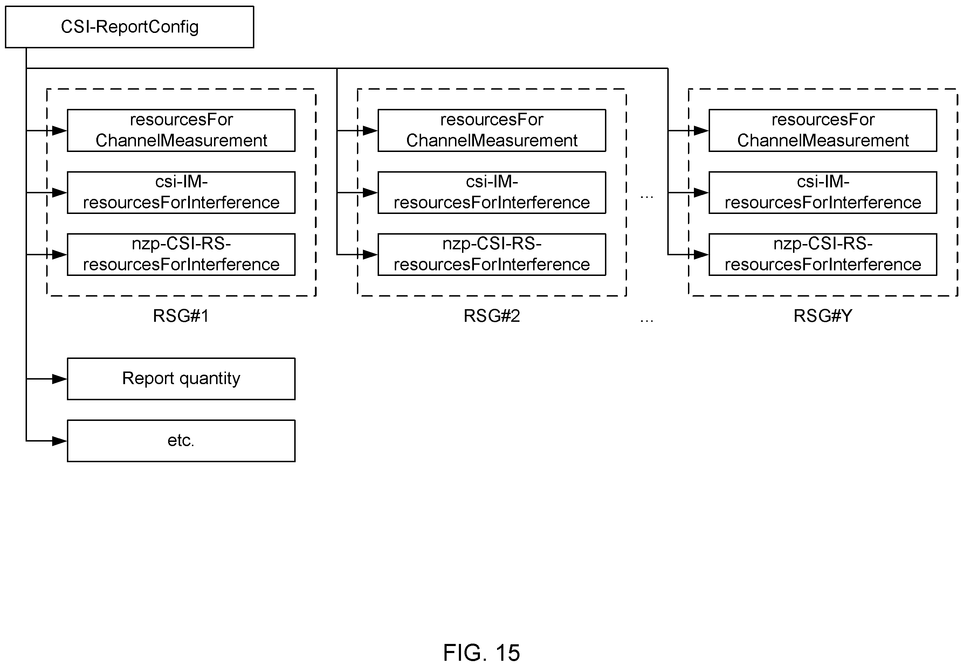

For example, as illustrated in Fig. 15, the CSI report configuration includes Y resource setting groups. Each resource setting group includes one resource setting for channel measurement and zero or more resource settings for interference measurement. The resource setting for interference measurement is the CSI-IM resource setting for interference or the NZP-CSI-RS resource setting for interference.

### <<Embodiment 2-2»

For one TRP, one rule of Interference Hypothesis Associations 1 and 2 below may be followed to reflect a plurality of different interference hypotheses depending on the determination of transmission of surrounding TRPs.

### [Interference Hypothesis Association 1]

For a plurality of different interference hypotheses, a separate configuration of CSI measurement and reporting may be configured in the UE.

One or more resource settings may be configured in one resource setting group in the CSI report configuration. When two resource setting groups are configured, one or the first resource setting may be for channel measurement, and the other or the second resource setting may be for interference measurement based on the CSI-IM.

The number of CSI-IM resources for interference measurement may be equal to the number of CSI-RS resources for channel measurement.

In one resource setting, each CSI-RS resource for channel measurement may be associated with a CSI-IM resource for each resource in the order of the CSI-RS resource in the resource set and the CSI-IM resource in the corresponding resource set.

When Ks (Ks > 1) resources are configured in the corresponding resource set for channel measurement, for each resource setting for interference measurement based on CSI-IM, the UE may derive a CSI parameter other than the CRI subject to the reported CRI. CSI k (k ≥ 0) may correspond to the configured (k + 1)th entry of the associated NZP-CSI-RS resource setting (nzp-CSI-RSResource) in the corresponding NZP-CSI-RS resource set information (nzp-CSI-RS-ResourceSet) for channel measurement and the (k + 1)th entry of the associated CSI-IM resource setting (csi-IM-Resource) in the corresponding CSI-IM resource set information (csi-IM-ResourceSet) (if configured).

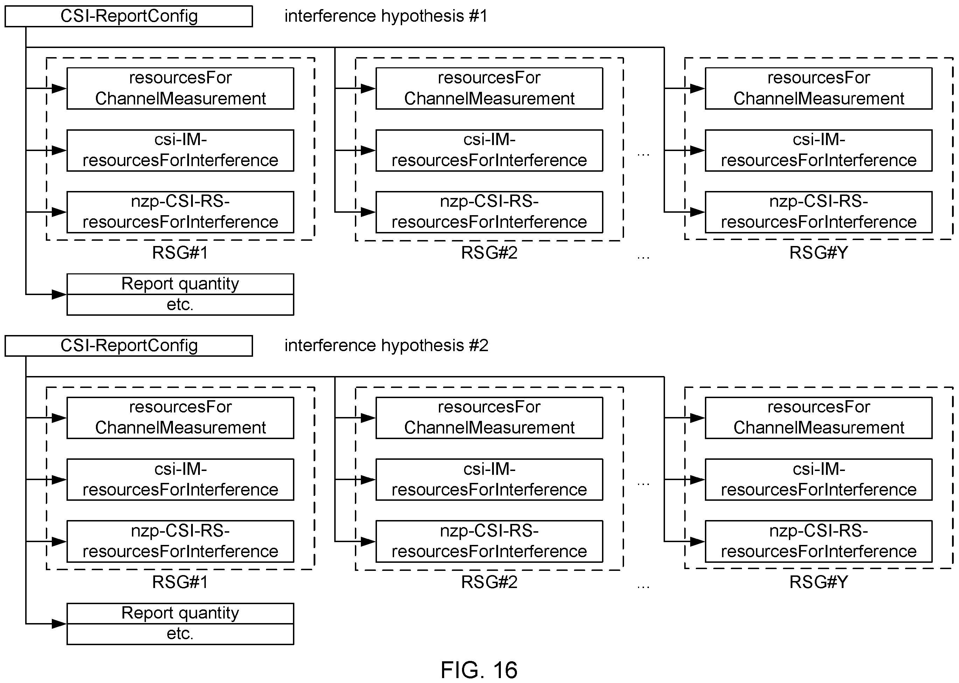

For example, as illustrated in Fig. 16, CSI Report Configurations #1 and #2 are respectively associated with Interference Hypotheses #1 and #2. Each CSI report configuration includes resource setting groups #1, #2, ..., #Y. One resource setting group may or may not include the NZP-CSI-RS resource setting.

In one CSI report, the CSI for a plurality of TRPs may be reported. The CSI report may be according to any of Contents 1 to 3 below.

### [[Content 1]]

The CSI parameters for a plurality of TRPs may be reported separately. For example, the UE may calculate the CSI parameter for each TRP and report the CSI parameter for each TRP. The CSI parameter may include at least one of an RI, a PMI, and a CQI.

The base station may recognize the resource setting group index for the CSI report according to any one of Resource Setting Group Index Determination Methods 1 and 2 below.

### [[[Resource Setting Group Index Determination Method 1]]]

The UE may explicitly report, in the CSI report, a resource setting group index corresponding to the resource setting group.

### [[[Resource Setting Group Index Determination Method 2]]]

A resource setting group index corresponding to the resource setting group may be implicitly determined.

For the CSI report content, the CSI for a plurality of different interference hypotheses may be mapped in the CSI report according to at least one of Mapping Methods 1 and 2 below.

### [[[[Mapping Method 1]]]]

A mapping order of a plurality of different CSI fields may be the same as that in Rel. 15. In the same CSI field (same type of CSI), a plurality of fields may be included, and each field may correspond to one resource setting group. The field corresponding to the lowest or highest resource setting group index may be mapped first (in the same CSI field, it may be mapped in ascending or descending order of resource setting group indexes).

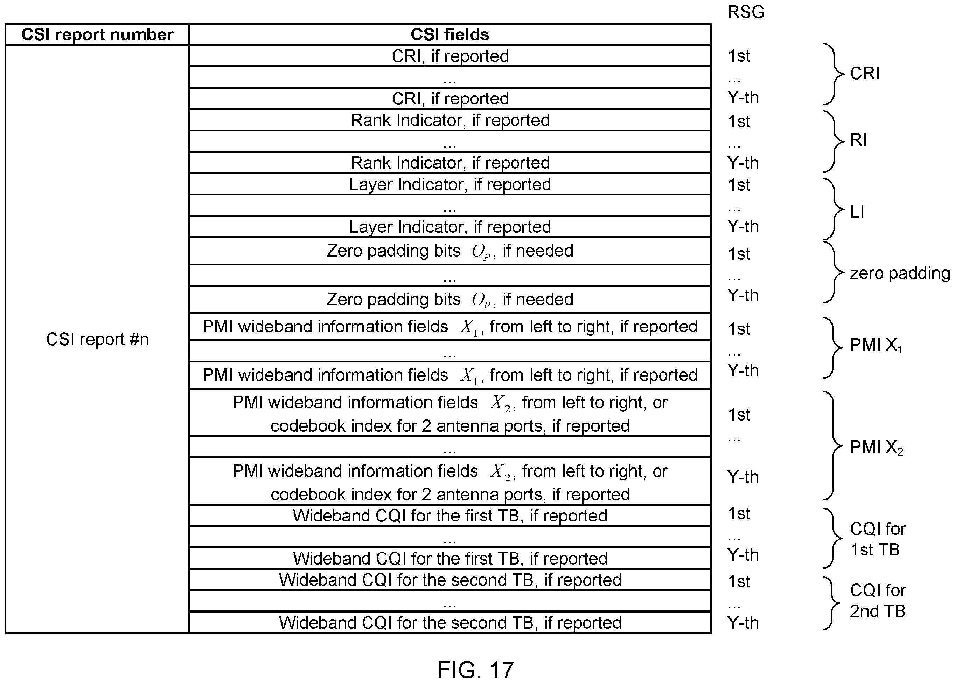

Fig. 17 is a diagram illustrating an example of a CSI field in CSI report #n. In CSI report #n, for one type of CSI, a field corresponding to the first resource setting group to a field corresponding to the Y-th resource setting group are consecutive.

### [[[[Mapping Method 2]]]]

For a given resource setting group, the mapping order of the plurality of different CSI fields may be the same as in Rel. 15. Over a plurality of different resource setting groups, the mapping order of the CSI may be ascending or descending order of resource setting group indexes.

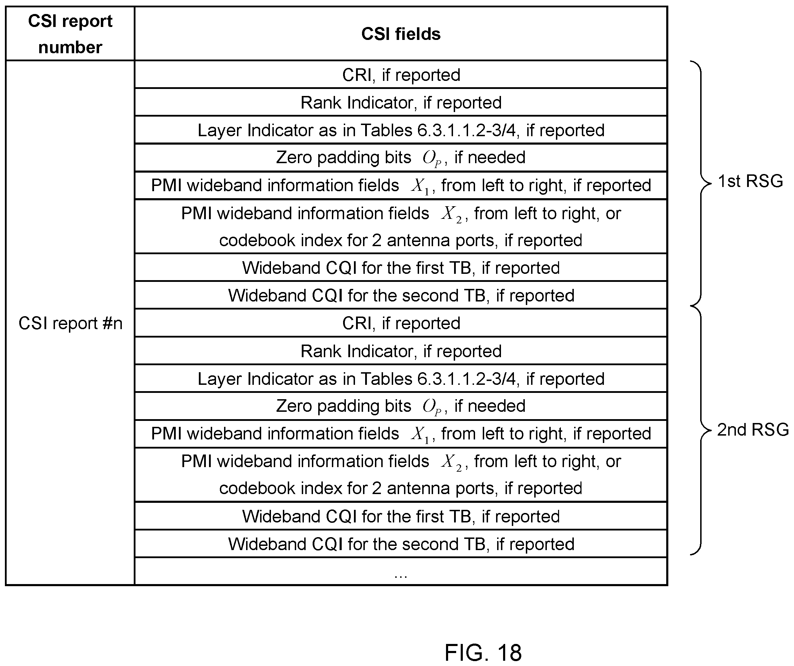

Fig. 18 is a diagram illustrating another example of a CSI field in CSI report #n. In CSI report #n, following the plurality of CSI fields corresponding to the first resource setting group, a plurality of CSI fields corresponding to the second resource setting group are mapped, and a plurality of CSI fields corresponding to the Y-th resource setting group are mapped.

### [[Content 2]]

The CSI parameters for a plurality of TRPs may be reported jointly. For example, the UE may calculate the joint CSI parameter for a plurality of TRPs and report the joint CSI parameter for the plurality of TRPs. One joint CSI parameter may be one value obtained from a plurality of values respectively corresponding to a plurality of TRPs for one type of CSI. The UE may derive one value of the joint CSI parameter by encoding a plurality of values for one type of CSI. One joint CSI parameter may correspond to one field. The CSI parameter may include at least one of an RI, a PMI, and a CQI.

The number of CSI parameters may be according to any one of CSI Parameter Number Determination Methods 1 and 2 below.

### [[[CSI Parameter Number Determination Method 1]]]

The number of joint CSI parameters reported may be specified in the specification. For example, in a y-th CSI report associated with Y resource setting groups, the number of CSI parameters reported may be C_{Y}^{y}.

### [[[CSI Parameter Number Determination Method 2]]]

The number of CSI parameters reported may be configured by RRC.

### [[Content 3]]

Whether the CSI parameters for the plurality of TRPs are reported separately or jointly may be configured by RRC.

This configuration may be according to any one of Configuration Methods 1 and 2 below.

### [[[Configuration Method 1]]]

Whether the CSI parameters for the plurality of TRPs are reported separately or jointly may be implicitly configured by RRC.

If the number of CSI reports is the same as the number of resource setting groups, separate CSI for a corresponding TRP is reported in one CSI report. Otherwise, joint CSI for a plurality of TRPs is reported.

### [[[Configuration Method 2]]]

Whether the CSI parameters for the plurality of TRPs are reported separately or jointly may be explicitly configured by RRC.

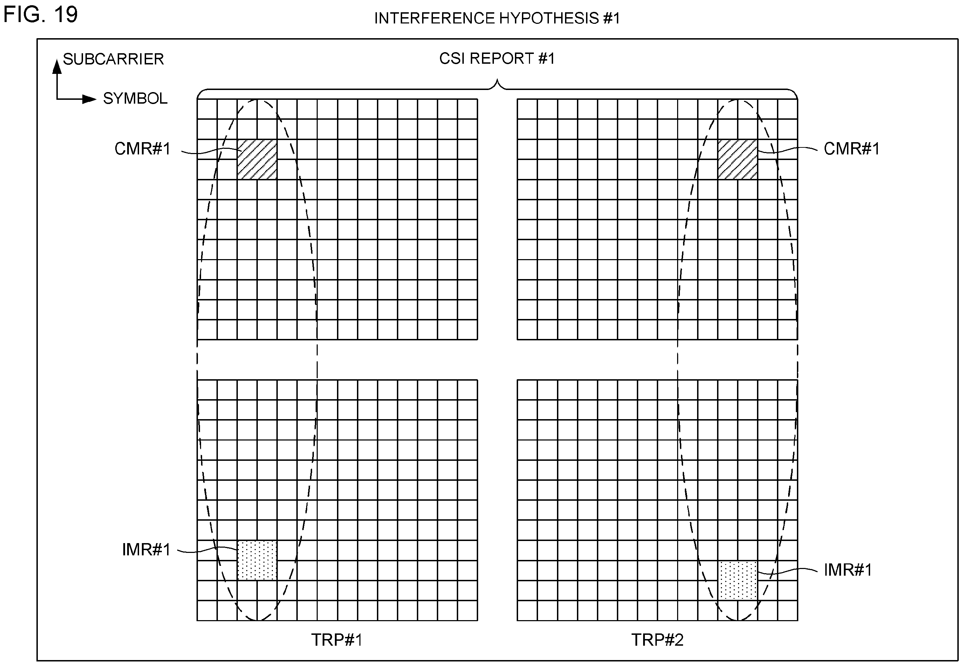

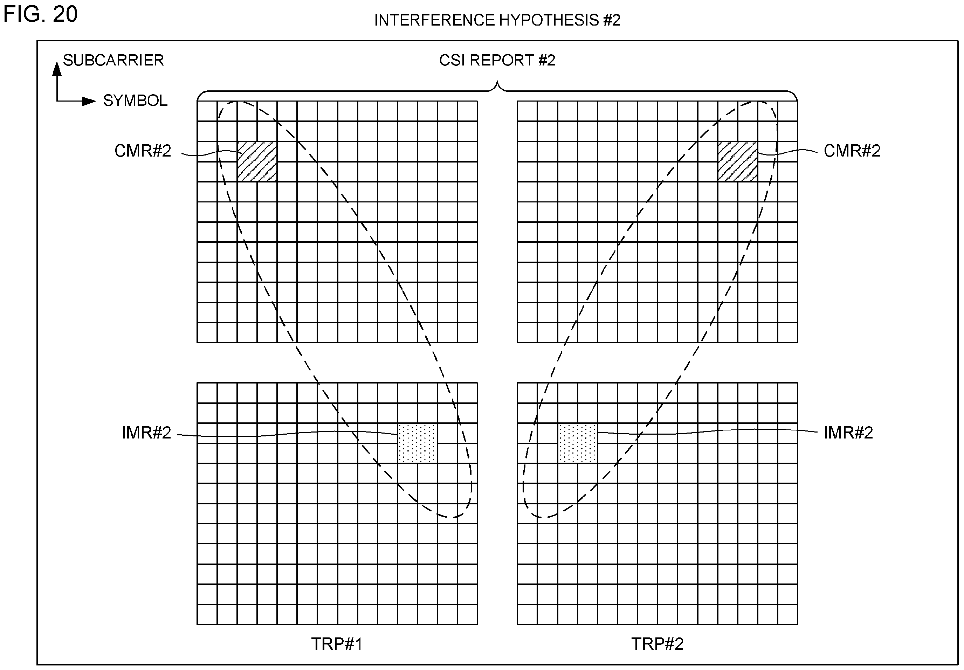

For example, as illustrated in Figs. 19 and 20, separated CSI measurement and reporting is configured for a plurality of different interference hypotheses. For example, CSI report #1 for Interference Hypothesis #1 without interference between TRPs includes Resource Setting Group #1 for TRP #1 and Resource Setting Group #2 for TRP #2 as illustrated in Fig. 19. Resources in Resource Setting Groups #1 and #2 do not overlap with each other. For example, CSI report #2 for Interference Hypothesis #2 with interference from one TRP includes Resource Setting Group #1 for TRP #1 and Resource Setting Group #2 for TRP #2 as illustrated in Fig. 20. The CMR of Resource Setting Group #1 overlaps with the IMR of Resource Setting Group #2, and the CMR of Resource Setting Group #2 overlaps with the IMR of Resource Setting Group #1.

### [Interference Hypothesis Association 2]

A joint configuration of CSI measurement and reporting for a plurality of different interference hypotheses may be configured in the UE.

A plurality of resource settings may be configured in one resource setting group in one CSI report configuration. One resource setting among the plurality of resource settings may be for channel measurement. Among the plurality of resource settings, a plurality of (M) resource settings may be for interference measurement based on CSI-IM.

For each resource setting for interference measurement performed on the CSI-IM, the number of CSI-IM resources for interference measurement may be equal to the number of CSI-RS resources for channel measurement.

In one resource setting, each CSI-RS resource for channel measurement may be associated with a CSI-IM resource for each resource in the order of the CSI-RS resource in the resource set and the CSI-IM resource in the corresponding resource set.

When Ks (Ks > 1) resources are configured in the corresponding resource set for channel measurement, for each resource setting for interference measurement based on CSI-IM, the UE may derive a CSI parameter other than the CRI subject to the reported CRI. CRI z = k + m*K_{S} (0 ≤ k < Ks, 0 ≤ m < M, 0 ≤ z < Z (M*K_{S})) may correspond to the configured (k + 1)th entry of the associated NZP-CSI-RS resource setting (nzp-CSI-RSResource) in the corresponding NZP-CSI-RS resource set information (nzp-CSI-RS-ResourceSet) for channel measurement and the (k + 1)th entry of the associated CSI-IM resource setting (csi-IM-Resource) in the corresponding CSI-IM resource set information (csi-IM-ResourceSet) of the (m + 1)th resource setting for interference measurement based on the CSI-IM (if configured).

Over a plurality of different resource setting groups in one CSI report configuration, the number of resource settings M for CSI-IM-based interference measurement may be the same.

Each resource setting for CSI-IM-based interference measurement in one resource setting group may be associated with a resource setting for CSI-IM-based interference measurement in another resource setting group for each resource setting.

If M (M > 1) resource settings for CSI-IM-based interference measurement are configured in one resource setting group, the (m + 1)th resource setting for CSI-IM-based interference measurement in the one resource setting group may be associated with the (m + 1)th resource setting in another resource setting group.

Resource setting for interference measurement based on the NZP-CSI-RS may or may not be configured. If configured, the content of Embodiment 2 may be applied to resource settings for interference measurement based on the NZP-CSI-RS.

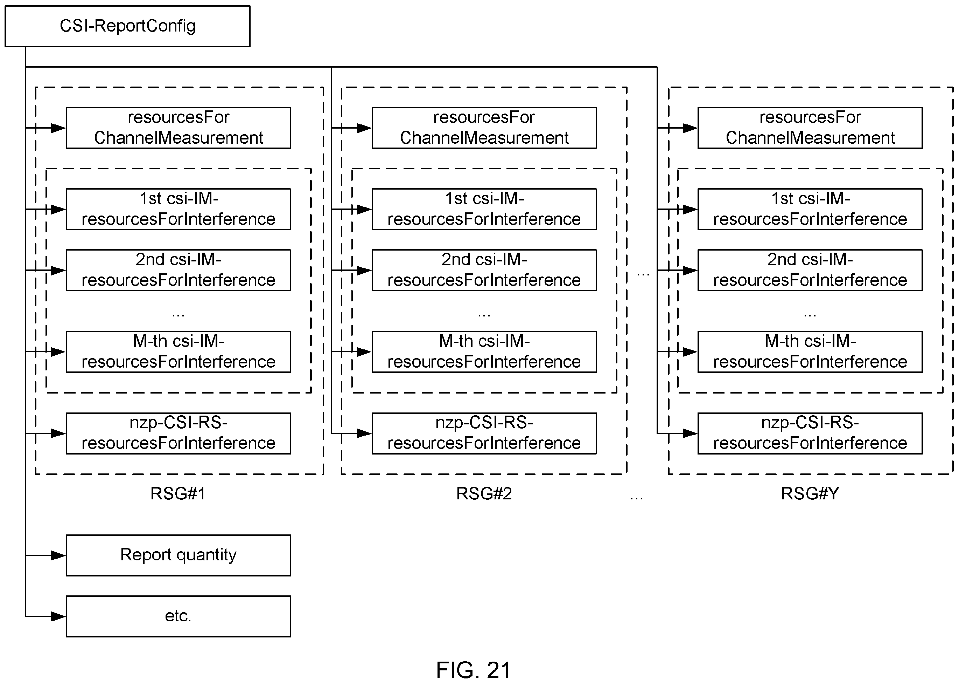

For example, as illustrated in Fig. 21, the CSI report configuration (CSI-ReportConfig) includes Y resource setting groups. One resource setting group includes one resource setting for channel measurement (resourcesForChannelMeasurement), M CSI-IM resource settings for interference (csi-IM-ResourceForInterference), and zero or more NZP-CSI-RS resource settings for interference (nzp-CSI-RS-ResourcesForInterference). One resource setting group may correspond to a plurality of TRPs. A plurality of resource settings in one resource setting group may respectively correspond to a plurality of interference hypotheses.

In one CSI report, the CSI for a plurality of TRPs and a plurality of interference hypotheses may be reported. The CSI report may be according to any of Contents 1 to 3 below.

### [[Content 1]]

The CSI parameters for a plurality of TRPs and a plurality of interference hypotheses may be reported separately. For example, the UE may calculate CSI parameters for each TRP and each interference hypothesis, and report the CSI parameters for each TRP and each interference hypothesis. The CSI parameter may include at least one of an RI, a PMI, and a CQI.

The base station may recognize the resource setting group index for the CSI report according to any one of Resource Setting Group Index Determination Methods 1 and 2 below.

### [[[Resource Setting Group Index Determination Method 1]]]

The UE may explicitly report, in the CSI report, a resource setting group index corresponding to the resource setting group.

### [[[Resource Setting Group Index Determination Method 2]]]

A resource setting group index corresponding to the resource setting group may be implicitly determined.

For one CSI report content, the CSI parameter may be mapped in the CSI report according to at least one of Mapping Methods 1 to 6 below.

### [[[[Mapping Method 1]]]]

The CSI parameter may be mapped to the CSI report in the following order: the CSI parameter type (CSI field name), the resource setting group (TRP) index, and the resource setting (interference hypothesis) index in one resource setting group.

### [[[[Mapping Method 2]]]]

The CSI parameter may be mapped to the CSI report in the following order: the CSI parameter type (CSI field name), the resource setting (interference hypothesis) index in one resource setting group, and the resource setting group (TRP) index.

### [[[[Mapping Method 3]]]]

The CSI parameter may be mapped to the CSI report in the following order: the resource setting group (TRP) index, the CSI parameter type (CSI field name), and the resource setting (interference hypothesis) index in one resource setting group.

### [[[[Mapping Method 4]]]]

The CSI parameter may be mapped to the CSI report in the following order: the resource setting group (TRP) index, the resource setting (interference hypothesis) index in one resource setting group, and the CSI parameter type (CSI field name).

### [[[[Mapping Method 5]]]]

The CSI parameter may be mapped to the CSI report in the following order: the resource setting (interference hypothesis) index in one resource setting group, the resource setting group (TRP) index, and the CSI parameter type (CSI field name).

### [[[[Mapping Method 6]]]]

The CSI parameter may be mapped to the CSI report in the following order: the resource setting (interference hypothesis) index in one resource setting group, the CSI parameter type (CSI field name), and the resource setting group (TRP) index.

### [[Content 2]]

For one interference hypothesis, the CSI parameters for a plurality of TRPs may be reported jointly. For example, the UE may calculate the joint CSI parameter for a plurality of TRPs and report the joint CSI parameter for the plurality of TRPs for one interference hypothesis. One joint CSI parameter may be one value obtained from a plurality of values respectively corresponding to a plurality of TRPs for one type of CSI for one interference hypothesis. The UE may derive one value of the joint CSI parameter by encoding a plurality of values for one type of CSI. One joint CSI parameter may correspond to one field. The CSI parameter may include at least one of an RI, a PMI, and a CQI.

The number of CSI parameters may be according to any one of CSI Parameter Number Determination Methods 1 and 2 below.

### [[[CSI Parameter Number Determination Method 1]]]

The number of joint CSI parameters reported may be specified in the specification. For example, in a y-th CSI report associated with Y resource setting groups, the number of CSI parameters reported may be C_{Y}^{y}.

### [[[CSI Parameter Number Determination Method 2]]]

The number of CSI parameters reported may be configured by RRC.

### [[Content 3]]

For one interference hypothesis, whether the CSI parameters for the plurality of TRPs are reported separately or jointly may be configured by RRC.

This configuration may be according to any one of Configuration Methods 1 and 2 below.

### [[[Configuration Method 1]]]

For one interference hypothesis, whether the CSI parameters for the plurality of TRPs are reported separately or jointly may be implicitly configured by RRC.

If the number of CSI reports is the same as the number of resource setting groups, separate CSI for a corresponding TRP is reported in one CSI report. Otherwise, joint CSI for a plurality of TRPs is reported.

### [[[Configuration Method 2]]]

For one interference hypothesis, whether the CSI parameters for the plurality of TRPs are reported separately or jointly may be explicitly configured by RRC.

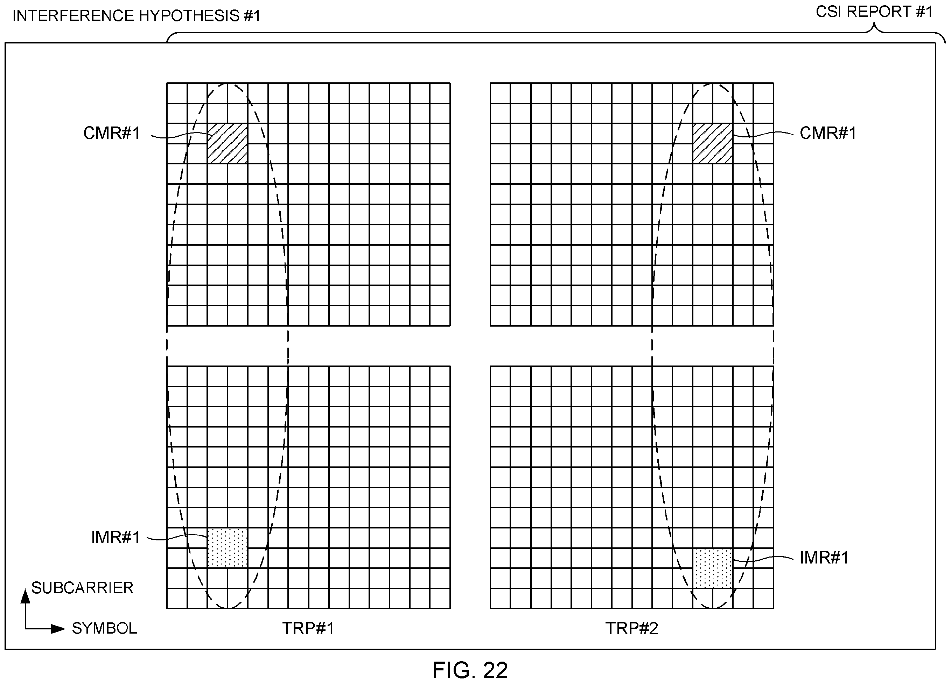

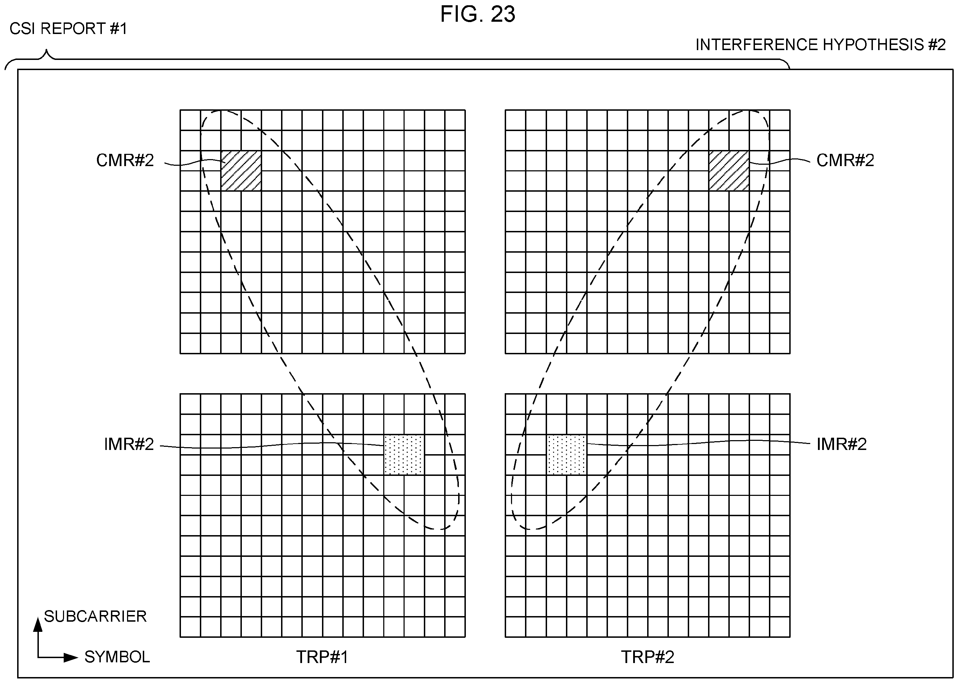

For example, as illustrated in Figs. 22 and 23, joint CSI measurement and reporting (CSI report #1) is configured for a plurality of interference hypotheses and a plurality of TRPs. For example, CSI report #1 includes Resource Setting Group #1 for TRP #1 and Resource Setting Group #2 for TRP #2. Resource Setting Group #1 for TRP #1 includes a resource setting for Interference Hypothesis #1 without interference between TRPs as illustrated in Fig. 22 and a resource setting for Interference Hypothesis #2 with interference from one TRP as illustrated in Fig. 23. Resource Setting Group #2 for TRP #2 includes a resource setting for Interference Hypothesis #1 without interference between TRPs as illustrated in Fig. 22 and a resource setting for Interference Hypothesis #2 with interference from one TRP as illustrated in Fig. 23. In Interference Hypothesis #1, resources in Resource Setting Groups #1 and #2 do not overlap with each other. In Interference Hypothesis #2, the CMR of Resource Setting Group #1 overlaps with the IMR of Resource Setting Group #2, and the CMR of Resource Setting Group #2 overlaps with the IMR of Resource Setting Group #1.

### <Embodiment 3>

Which one: separate CSI measurement/reporting configuration and joint CSI measurement/reporting configuration to use for a plurality of TRPs may be according to any one of Determination Methods 1 and 2 below.

### [Determination Method 1]

One of separate CSI measurement/reporting and joint CSI measurement/reporting may be specified in the specification.

### [Determination Method 2]

Separate CSI measurement/reporting or joint CSI measurement/reporting may be configured by RRC. If separate CSI measurement/reporting is configured, Embodiment 1 may be applied. If joint CSI measurement/reporting is configured, Embodiment 2 may be applied.

According to Embodiment 3, one of the separate CSI measurement/reporting and the joint CSI measurement/reporting can be appropriately configured.

### (Radio Communication System)

Hereinafter, a configuration of a radio communication system according to one embodiment of the present disclosure will be described. In this radio communication system, communication is performed using one or a combination of the radio communication methods according to the embodiments of the present disclosure.

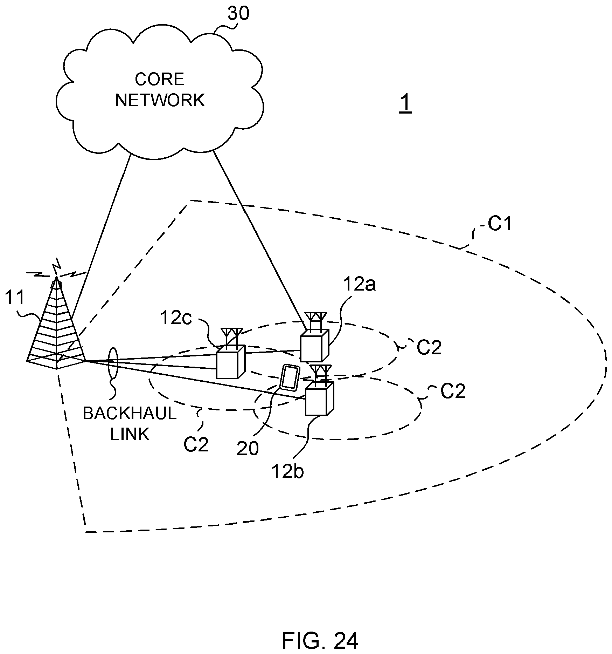

Fig. 24 is a diagram illustrating an example of a schematic configuration of a radio communication system according to one embodiment. A radio communication system 1 may be a system that implements communication using long term evolution (LTE), 5th generation mobile communication system New Radio (5G NR), and the like drafted as the specification by third generation partnership project (3GPP).

Further, the radio communication system 1 may support dual connectivity (multi-RAT dual connectivity (MR-DC)) between a plurality of radio access technologies (RATs). The MR-DC may include dual connectivity between LTE (Evolved Universal Terrestrial Radio Access (E-UTRA)) and NR (E-UTRA-NR Dual Connectivity (EN-DC)), dual connectivity between NR and LTE (NR-E-UTRA Dual Connectivity (NE-DC)), and the like.

In the EN-DC, an LTE (E-UTRA) base station (eNB) is a master node (MN), and an NR base station (gNB) is a secondary node (SN). In the NE-DC, an NR base station (gNB) is MN, and an LTE (E-UTRA) base station (eNB) is SN.

The radio communication system 1 may support dual connectivity between a plurality of base stations in the same RAT (for example, dual connectivity in which both MN and SN are NR base stations (gNB) (NR-NR dual connectivity (NN-DC)).

The radio communication system 1 may include a base station 11 that forms a macro cell C1 with a relatively wide coverage, and base stations 12 (12a to 12c) that are disposed within the macro cell C1 and that form small cells C2 narrower than the macro cell C1. A user terminal 20 may be located in at least one cell. The arrangement, number, and the like of cells and user terminals 20 are not limited to the aspects illustrated in the drawings. Hereinafter, the base stations 11 and 12 will be collectively referred to as base stations 10 unless specified otherwise.

The user terminal 20 may be connected to at least one of the plurality of base stations 10. The user terminal 20 may use at least one of carrier aggregation (CA) using a plurality of component carriers (CC) and dual connectivity (DC).

Each CC may be included in at least one of a Frequency Range 1 (FR1) or a Frequency Range 2 (FR2). The macro cell C1 may be included in FR1, and the small cell C2 may be included in FR2. For example, FR1 may be a frequency range of 6 GHz or less (sub-6 GHz), and FR2 may be a frequency range higher than 24 GHz (above-24 GHz). Note that the frequency ranges, definitions, and the like of FR1 and FR2 are not limited thereto, and, for example, FR1 may correspond to a frequency range higher than FR2.

Further, the user terminal 20 may perform communication in each CC using at least one of time division duplex (TDD) and frequency division duplex (FDD).

The plurality of base stations 10 may be connected by wire (for example, an optical fiber or an X2 interface in compliance with common public radio interface (CPRI)) or wirelessly (for example, NR communication). For example, when NR communication is used as a backhaul between the base stations 11 and 12, the base station 11 corresponding to a higher-level station may be referred to as an integrated access backhaul (IAB) donor, and the base station 12 corresponding to a relay station (relay) may be referred to as an IAB node.

The base station 10 may be connected to a core network 30 via another base station 10 or directly. The core network 30 may include, for example, at least one of evolved packet core (EPC), 5G core network (5GCN), next generation core (NGC), and the like.

The user terminal 20 may be a terminal corresponding to at least one of communication methods such as LTE, LTE-A, and 5G.

In the radio communication system 1, a radio access method based on orthogonal frequency division multiplexing (OFDM) may be used. For example, in at least one of downlink (DL) and uplink (UL), cyclic prefix OFDM (CP-OFDM), discrete Fourier transform spread OFDM (DFT-s-OFDM), orthogonal frequency division multiple access (OFDMA), single carrier frequency division multiple access (SC-FDMA), and the like may be used.

The radio access method may be referred to as a waveform. Note that in the radio communication system 1, another radio access method (for example, another single carrier transmission method or another multi-carrier transmission method) may be used as the UL and DL radio access method.

In the radio communication system 1, as a downlink channel, a downlink shared channel (physical downlink shared channel (PDSCH)) shared by each user terminal 20, a broadcast channel (physical broadcast channel (PBCH)), a downlink control channel (physical downlink control channel (PDCCH)), or the like may be used.

Further, in the radio communication system 1, as an uplink channel, an uplink shared channel (physical uplink shared channel (PUSCH)) shared by each user terminal 20, an uplink control channel (physical uplink control channel (PUCCH)), a random access channel (physical random access channel (PRACH)), or the like may be used.

User data, higher layer control information, and a system information block (SIB) and the like are transmitted by the PDSCH. The PUSCH may transmit user data, higher layer control information, and the like. Further, the PBCH may transmit a master information block (MIB).

The PDCCH may transmit lower layer control information. The lower layer control information may include, for example, downlink control information (DCI) including scheduling information of at least one of the PDSCH and the PUSCH.

Note that, the DCI that schedules the PDSCH may be referred to as DL assignment, DL DCI, and the like, and the DCI that schedules the PUSCH may be referred to as UL grant, UL DCI, and the like. Note that the PDSCH may be replaced with DL data, and the PUSCH may be replaced with UL data.

A control resource set (CORESET) and a search space may be used to detect the PDCCH. The CORESET corresponds to a resource that searches for DCI. The search space corresponds to a search area and a search method for PDCCH candidates. One CORESET may be associated with one or a plurality of search spaces. The UE may monitor the CORESET associated with a given search space based on search space configuration.

One search space may correspond to a PDCCH candidate corresponding to one or a plurality of aggregation levels. One or a plurality of search spaces may be referred to as a search space set. Note that "search space", "search space set", "search space configuration", "search space set configuration", "CORESET", "CORESET configuration", and the like in the present disclosure may be replaced with each other.

Uplink control information (UCI) including at least one of channel state information (CSI), delivery confirmation information (which may be referred to as, for example, hybrid automatic repeat request acknowledgement (HARQ-ACK), ACK/NACK, or the like), scheduling request (SR), and the like may be transmitted by the PUCCH. A random access preamble for establishing a connection with a cell may be transmitted by the PRACH.

Note that in the present disclosure, downlink, uplink, and the like may be expressed without "link". Further, various channels may be expressed without adding "physical" at the beginning thereof.

In the radio communication system 1, a synchronization signal (SS), a downlink reference signal (DL-RS), and the like may be transmitted. In the radio communication systems 1, a cell-specific reference signal (CRS), a channel state information reference signal (CSI-RS), a demodulation reference signal (DMRS), a positioning reference signal (PRS), a phase tracking reference signal (PTRS), and the like may be transmitted as the DL-RS.

The synchronization signal may be, for example, at least one of a primary synchronization signal (PSS) and a secondary synchronization signal (SSS). A signal block including an SS (PSS or SSS) and a PBCH (and DMRS for PBCH) may be referred to as an SS/PBCH block, an SS block (SSB), and the like. Note that the SS, the SSB, or the like may also be referred to as a reference signal.

Further, in the radio communication system 1, a sounding reference signal (SRS), a demodulation reference signal (DMRS), and the like may be transmitted as an uplink reference signal (UL-RS). Note that the DMRS may be referred to as a user terminal-specific reference signal (UE-specific reference signal)".

### (Base station)

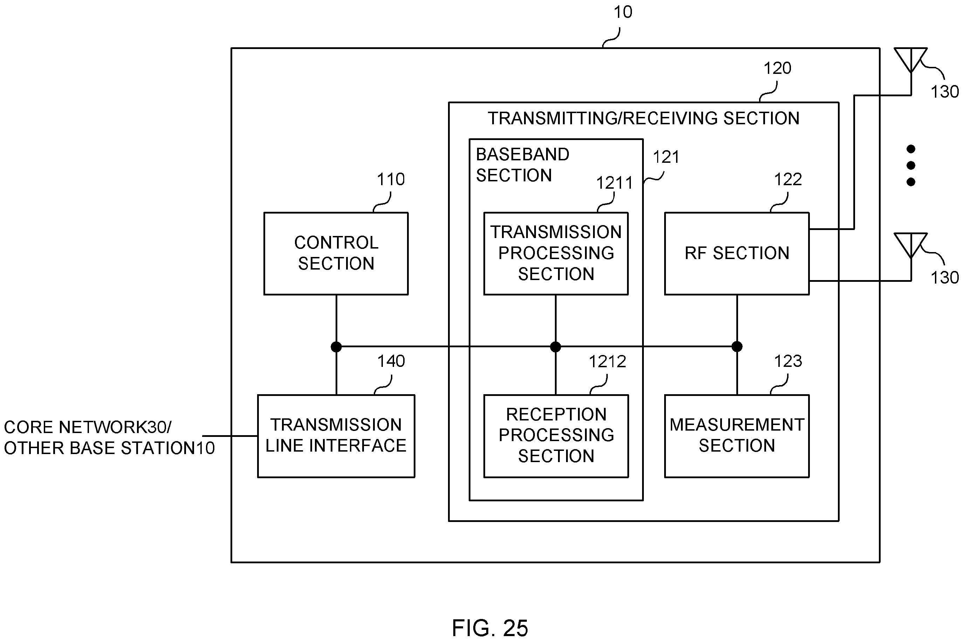

Fig. 25 is a diagram illustrating an example of a configuration of the base station according to one embodiment. The base station 10 includes a control section 110, a transmitting/receiving section 120, a transmission/reception antenna 130, and a transmission line interface 140. Note that one or more of the control sections 110, one or more of the transmission/reception sections 120, one or more of the transmission/reception antennas 130, and one or more of the transmission line interfaces 140 may be included.

Note that, although this example primarily indicates functional blocks of characteristic parts of the present embodiment, it may be assumed that the base station 10 has other functional blocks that are necessary for radio communication as well. A part of processing of each section described below may be omitted.

The control section 110 controls the entire base station 10. The control section 110 can include a controller, a control circuit, and the like that are described on the basis of common recognition in the technical field related to the present disclosure.

The control section 110 may control signal generation, scheduling (for example, resource allocation or mapping), and the like. The control section 110 may control transmission/reception, measurement, and the like using the transmitting/receiving section 120, the transmission/reception antenna 130, and the transmission line interface 140. The control section 110 may generate data to be transmitted as a signal, control information, a sequence, and the like, and may transfer the data, the control information, the sequence, and the like to the transmitting/receiving section 120. The control section 110 may perform call processing (such as configuration or release) of a communication channel, management of the state of the base station 10, and management of a radio resource.

The transmitting/receiving section 120 may include a baseband section 121, a radio frequency (RF) section 122, and a measurement section 123. The baseband section 121 may include a transmission processing section 1211 and a reception processing section 1212. The transmitting/receiving section 120 can include a transmitter/receiver, an RF circuit, a baseband circuit, a filter, a phase shifter, a measurement circuit, a transmission/reception circuit, and the like that are described on the basis of common recognition in the technical field related to the present disclosure.

The transmitting/receiving section 120 may be constituted as an integrated transmission/reception section, or may be constituted by a transmission section and a reception section. The transmission section may be constituted by the transmission processing section 1211 and the RF section 122. The reception section may be constituted by the reception processing section 1212, the RF section 122, and the measurement section 123.

The transmission/reception antenna 130 can include an antenna described on the basis of common recognition in the technical field related to the present disclosure, for example, an array antenna.

The transmitting/receiving section 120 may transmit the above-described downlink channel, synchronization signal, downlink reference signal, and the like. The transmitting/receiving section 120 may receive the above-described uplink channel, uplink reference signal, and the like.

The transmitting/receiving section 120 may form at least one of a Tx beam and a reception beam by using digital beam forming (for example, precoding), analog beam forming (for example, phase rotation), and the like.

The transmitting/receiving section 120 (transmission processing section 1211) may perform packet data convergence protocol (PDCP) layer processing, radio link control (RLC) layer processing (for example, RLC retransmission control), medium access control (MAC) layer processing (for example, HARQ retransmission control), and the like, for example, on data or control information acquired from the control section 110 to generate a bit string to be transmitted.

The transmitting/receiving section 120 (transmission processing section 1211) may perform transmission processing such as channel encoding (which may include error correction encoding), modulation, mapping, filtering processing, discrete Fourier transform (DFT) processing (if necessary), inverse fast Fourier transform (IFFT) processing, precoding, or digital-analog transform on the bit string to be transmitted, and may output a baseband signal.

The transmitting/receiving section 120 (RF section 122) may perform modulation to a radio frequency band, filtering processing, amplification, and the like on the baseband signal, and may transmit a signal in the radio frequency band via the transmission/reception antenna 130.

Meanwhile, the transmitting/receiving section 120 (RF section 122) may perform amplification, filtering processing, demodulation to a baseband signal, and the like on the signal in the radio frequency band received by the transmission/reception antenna 130.

The transmitting/receiving section 120 (reception processing section 1212) may apply reception processing such as analog-digital transform, fast Fourier transform (FFT) processing, inverse discrete Fourier transform (IDFT) processing (if necessary), filtering processing, demapping, demodulation, decoding (which may include error correction decoding), MAC layer processing, RLC layer processing, or PDCP layer processing on the acquired baseband signal to acquire user data and the like.

The transmitting/receiving section 120 (measurement section 123) may perform measurement on the received signal. For example, the measurement section 123 may perform radio resource management (RRM) measurement, channel state information (CSI) measurement, and the like based on the received signal. The measurement section 123 may measure received power (e.g., reference signal received power (RSRP)), received quality (e.g., reference signal received quality (RSRQ), a signal to interference plus noise ratio (SINR), or a signal to noise ratio (SNR)), signal strength (e.g., received signal strength indicator (RSSI)), propagation path information (e.g., CSI), and the like. The measurement result may be output to the control section 110.

The transmission line interface 140 may transmit/receive a signal (backhaul signaling) to and from an apparatus included in the core network 30, other base stations 10, and the like, and may acquire, transmit, and the like user data (user plane data), control plane data, and the like for the user terminal 20.

Note that the transmission section and the reception section of the base station 10 in the present disclosure may be constituted by at least one of the transmitting/receiving section 120, the transmission/reception antenna 130, and the transmission line interface 140.

The transmitting/receiving section 120 may transmit a plurality of configurations (separate configuration, CSI report configuration) for measurement and reporting of the channel state information (CSI). The plurality of configurations may correspond to two or more transmission/reception points. The control section 110 may acquire at least one CSI report based on the plurality of configurations (Embodiment 1).

The transmitting/receiving section 120 may transmit at least one configuration (joint configuration, CSI report configuration) for measurement and reporting of the channel state information (CSI) to a plurality of transmission/reception points. The control section 110 may acquire the CSI report based on the configuration (Embodiment 2).

### (User Terminal)

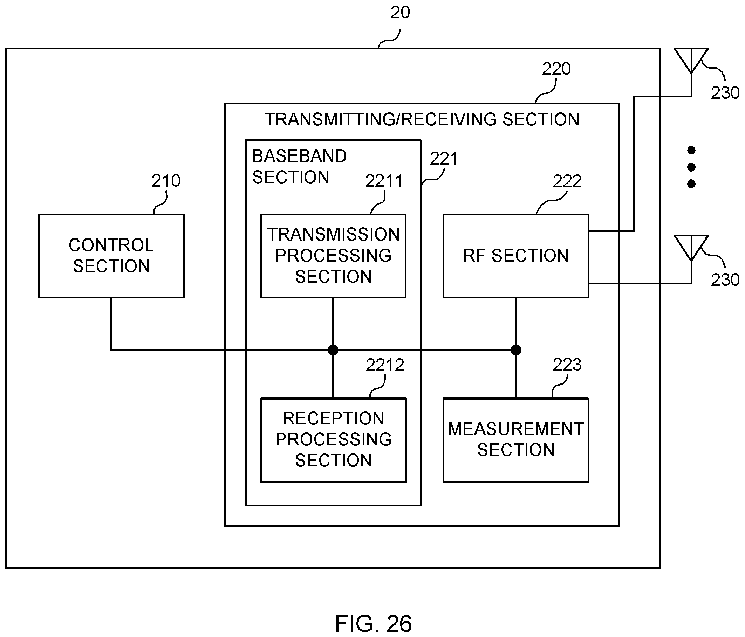

Fig. 26 is a diagram illustrating an example of a configuration of a user terminal according to one embodiment. The user terminal 20 includes a control section 210, a transmitting/receiving section 220, and a transmission/reception antenna 230. Note that one or more of the control sections 210, one or more of the transmission/reception sections 220, and one or more of the transmission/reception antennas 230 may be included.

Note that, although this example mainly describes functional blocks of a characteristic part of the present embodiment, it may be assumed that the user terminal 20 includes other functional blocks that are necessary for radio communication as well. A part of processing of each section described below may be omitted.

The control section 210 controls the entire user terminal 20. The control section 210 can include a controller, a control circuit, and the like that are described on the basis of common recognition in the technical field related to the present disclosure.

The control section 210 may control signal generation, mapping, and the like. The control section 210 may control transmission/reception, measurement, and the like using the transmitting/receiving section 220 and the transmission/reception antenna 230. The control section 210 may generate data to be transmitted as a signal, control information, a sequence, and the like, and may transfer the data, the control information, the sequence, and the like to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can include a transmitter/receiver, an RF circuit, a baseband circuit, a filter, a phase shifter, a measurement circuit, a transmission/reception circuit, and the like that are described on the basis of common recognition in the technical field related to the present disclosure.

The transmitting/receiving section 220 may be constituted as an integrated transmission/reception section, or may be constituted by a transmission section and a reception section. The transmission section may be constituted by the transmission processing section 2211 and the RF section 222. The reception section may be constituted by the reception processing section 2212, the RF section 222, and the measurement section 223.

The transmission/reception antenna 230 can include an antenna described on the basis of common recognition in the technical field related to the present disclosure, for example, an array antenna.

The transmitting/receiving section 220 may receive the above-described downlink channel, synchronization signal, downlink reference signal, and the like. The transmitting/receiving section 220 may transmit the above-described uplink channel, uplink reference signal, and the like.

The transmitting/receiving section 220 may form at least one of a Tx beam and a reception beam by using digital beam forming (for example, precoding), analog beam forming (for example, phase rotation), and the like.

The transmitting/receiving section 220 (transmission processing section 2211) may perform PDCP layer processing, RLC layer processing (for example, RLC retransmission control), MAC layer processing (for example, HARQ retransmission control), and the like, for example, on data or control information acquired from the control section 210 to generate a bit string to be transmitted.

The transmitting/receiving section 220 (transmission processing section 2211) may perform transmission processing such as channel encoding (which may include error correction encoding), modulation, mapping, filtering processing, DFT processing (if necessary), IFFT processing, precoding, or digital-analog transform on a bit string to be transmitted, and may output a baseband signal.

Note that whether or not to apply DFT processing may be determined based on configuration of transform precoding. When transform precoding is enabled for a channel (for example, PUSCH), the transmitting/receiving section 220 (transmission processing section 2211) may perform DFT processing as the transmission processing in order to transmit the channel using a DFT-s-OFDM waveform. When transform precoding is not enabled for a channel (for example, PUSCH), the transmitting/receiving section 220 (transmission processing section 2211) may not perform DFT processing as the transmission processing.

The transmitting/receiving section 220 (RF section 222) may perform modulation to a radio frequency band, filtering processing, amplification, and the like on the base band signal, and may transmit a signal in the radio frequency band via the transmission/reception antenna 230.

Meanwhile, the transmitting/receiving section 220 (RF section 222) may perform amplification, filtering processing, demodulation to a base band signal, and the like on the signal in the radio frequency band received by the transmission/reception antenna 230.

The transmitting/receiving section 220 (reception processing section 2212) may apply reception processing such as analog-digital transform, FFT processing, IDFT processing (if necessary), filtering processing, demapping, demodulation, decoding (which may include error correction decoding), MAC layer processing, RLC layer processing, and PDCP layer processing on the acquired baseband signal, to acquire user data and the like.

The transmitting/receiving section 220 (measurement section 223) may perform measurement on the received signal. For example, the measurement section 223 may perform RRM measurement, CSI measurement, and the like based on the received signal. The measurement section 223 may measure received power (e.g., RSRP), received quality (e.g., RSRQ, SINR, or SNR), signal strength (e.g., RSSI), propagation path information (e.g., CSI), and the like. The measurement result may be output to the control section 210.

Note that, the transmission section and the reception section of the user terminal 20 in the present disclosure may include at least one of the transmitting/receiving section 220, the transmission/reception antenna 230, or the transmission line interface 240.

The transmitting/receiving section 220 may receive a plurality of configurations (separate configuration, CSI report configuration) for measurement and reporting of the channel state information (CSI). The plurality of configurations may correspond to two or more transmission/reception points. The control section 210 may perform CSI measurement and reporting based on the plurality of configurations (Embodiment 1).

Each of the plurality of configurations may include an index (for example, CSI reporting group index, CORESET pool index) associated with a corresponding transmission/reception point.

Two or more configurations of the plurality of configurations may correspond to one transmission/reception point. At least one resource of channel measurement and interference measurement may be different between the two or more configurations.

One configuration of the plurality of configurations may indicate a plurality of resources for interference measurement. The control section 210 may measure a plurality of pieces of CSI on the basis of the plurality of resources and report one CSI report including the plurality of pieces of CSI.

The transmitting/receiving section 220 may receive at least one configuration (joint configuration, CSI report configuration) for measurement and reporting of the channel state information (CSI) to a plurality of transmission/reception points. The control section 210 may perform CSI measurement and reporting based on the configuration (Embodiment 2).

Each of the at least one configuration may include a plurality of groups (for example, resource setting group) of channel measurement resources and interference measurement resources. Each of the plurality of groups may include an index (for example, resource setting group index) associated with a transmission/reception point.

The at least one configuration may be a plurality of configurations. At least one of a channel measurement resource and an interference measurement resource (for example, resource setting, interference hypothesis) may be different among the plurality of configurations.

The at least one configuration may be one configuration. Each of the plurality of groups may include a plurality of combinations of channel measurement resources and interference measurement resources. At least one of a channel measurement resource and an interference measurement resource may be different among the plurality of combinations.

### (Hardware Configuration)

Note that the block diagrams that have been used to describe the above embodiments illustrate blocks in functional units. These functional blocks (configuration units) may be implemented in arbitrary combinations of at least one of hardware or software. Further, the method for implementing each functional block is not particularly limited. That is, each functional block may be implemented by a single apparatus physically or logically aggregated, or may be implemented by directly or indirectly connecting two or more physically or logically separate apparatuses (using wire, wireless, or the like, for example) and using these plural apparatuses. The functional blocks may be implemented by combining software with the above-described single apparatus or the above-described plurality of apparatuses.

Here, the function includes, but is not limited to, deciding, determining, judging, calculating, computing, processing, deriving, investigating, searching, ascertaining, receiving, transmitting, outputting, accessing, solving, selecting, choosing, establishing, comparing, assuming, expecting, considering, broadcasting, notifying, communicating, forwarding, configuring, reconfiguring, allocating, mapping, and assigning. For example, a functional block (configuration unit) that causes transmission to function may be referred to as a transmitting unit, a transmitter, and the like. In any case, as described above, the implementation method is not particularly limited.

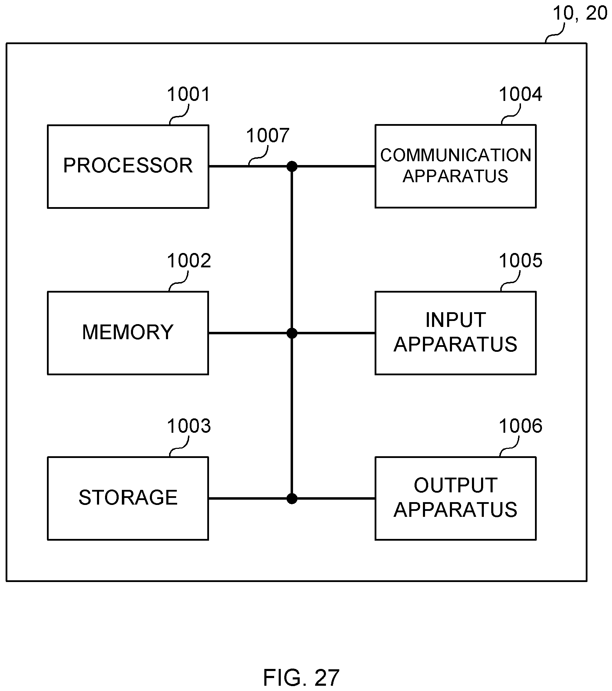

For example, the base station, the user terminal, and the like according to one embodiment of the present disclosure may function as a computer that executes the processing of the radio communication method of the present disclosure. Fig. 27 is a diagram illustrating an example of a hardware configuration of the base station and the user terminal according to one embodiment. Physically, the above-described base station 10 and user terminal 20 may be configured as a computer apparatus that includes a processor 1001, a memory 1002, a storage 1003, a communication apparatus 1004, an input apparatus 1005, an output apparatus 1006, a bus 1007, and the like.

Note that in the present disclosure, the terms such as an apparatus, a circuit, a device, a section, or a unit can be replaced with each other. The hardware configuration of the base station 10 and the user terminal 20 may be configured to include one or a plurality of apparatuses illustrated in the drawings, or may be configured without including some apparatuses.

For example, although only one processor 1001 is illustrated, a plurality of processors may be provided. Further, the processing may be executed by one processor, or the processing may be executed in sequence or using other different methods simultaneously by two or more processors. Note that the processor 1001 may be implemented with one or more chips.

Each of functions of the base station 10 and the user terminal 20 is implemented by causing given software (program) to be read on hardware such as the processor 1001 or the memory 1002, thereby causing the processor 1001 to perform operation, controlling communication via the communication apparatus 1004, and controlling at least one of reading and writing of data in the memory 1002 and the storage 1003.

The processor 1001 may control the whole computer by, for example, running an operating system. As the processor 1001, provided may be a central processing unit (CPU) including an interface with peripheral equipment, a control device, an operation device, a register, and the like. For example, at least a part of the above-described control section 110(210), transmitting/receiving section 120(220), and the like may be implemented by the processor 1001.

Furthermore, the processor 1001 reads programs (program codes), software modules, or data, from at least one of the storage 1003 and the communication apparatus 1004, into the memory 1002, and executes various processing according to these. As the program, a program to cause a computer to execute at least a part of the operation described in the above-described embodiment is used. For example, the control section 110 (210) may be implemented by a control program that is stored in the memory 1002 and operates in the processor 1001, and another functional block may be implemented similarly.

The memory 1002 is a computer-readable recording medium, and may be constituted by, for example, at least one of a read only memory (ROM), an erasable programmable ROM (EPROM), an electrically EPROM (EEPROM), a random access memory (RAM) and/or other appropriate storage media. The memory 1002 may be referred to as a register, a cache, a main memory (primary storage apparatus), and the like. The memory 1002 can store a program (program code), a software module, and the like, which are executable for implementing the radio communication method according to one embodiment of the present disclosure.

The storage 1003 is a computer-readable recording medium, and may be constituted by, for example, at least one of a flexible disk, a floppy (registered trademark) disk, a magnetooptical disk (for example, a compact disc ROM (CD-ROM) and the like), a digital versatile disc, a Blu-ray (registered trademark) disk), a removable disk, a hard disk drive, a smart card, a flash memory device (for example, a card, a stick, a key drive), a magnetic stripe, a database, a server, and other appropriate storage media. The storage 1003 may be referred to as an auxiliary storage apparatus.

The communication apparatus 1004 is hardware (transmitting/receiving device) for allowing inter-computer communication by using at least one of a wired network and a wireless network, and may be referred to as, for example, a network device, a network controller, a network card, a communication module, and the like. The communication apparatus 1004 may be constituted by a high frequency switch, a duplexer, a filter, a frequency synthesizer, and the like in order to implement, for example, at least one of frequency division duplex (FDD) and time division duplex (TDD). For example, the transmitting/receiving section 120 (220), the transmission/reception antenna 130(230), and the like described above may be implemented by the communication apparatus 1004. The transmitting/receiving section 120 (220) may be implemented by physically or logically separating a transmission section 120a (220a) and a reception section 120b (220b) from each other.

The input apparatus 1005 is an input device for receiving input from the outside (for example, a keyboard, a mouse, a microphone, a switch, a button, a sensor and so on). The output apparatus 1006 is an output device that performs output to the outside (e.g., a display, a speaker, a light emitting diode (LED) lamp, and the like). Note that the input apparatus 1005 and the output apparatus 1006 may be provided in an integrated structure (for example, a touch panel).

Further, the apparatuses such as the processor 1001 and the memory 1002 are connected by the bus 1007 for communicating information. The bus 1007 may be configured by a single bus, or may be configured by buses that vary between apparatuses.

Further, the base station 10 and the user terminal 20 may include hardware such as a microprocessor, a digital signal processor (DSP), an application specific integrated circuit (ASIC), a programmable logic device (PLD), or a field programmable gate array (FPGA), and some or all of the functional blocks may be implemented by the hardware. For example, the processor 1001 may be implemented with at least one of these pieces of hardware.

### (Variations)

Note that terms described in the present disclosure and terms necessary for understanding the present disclosure may be replaced with terms that have the same or similar meanings. For example, a channel, a symbol, and a signal (signal or signaling) may be read interchangeably. Further, the signal may be a message. A reference signal can be abbreviated as an RS, and may be referred to as a pilot, a pilot signal, and the like, depending on which standard applies. Furthermore, a component carrier (CC) may be referred to as a cell, a frequency carrier, a carrier frequency, and the like.

A radio frame may include one or a plurality of periods (frames) in a time domain. Each of the one or plurality of periods (frames) constituting the radio frame may be referred to as a subframe. Furthermore, a subframe may include one or a plurality of slots in the time domain. A subframe may be a fixed time duration (for example, 1 ms) that is not dependent on numerology.

Here, numerology may be a communication parameter applied to at least one of transmission and reception of a given signal or channel. Numerology may indicate at least one of, for example, a subcarrier spacing (SCS), a bandwidth, a symbol length, a cyclic prefix length, a transmission time interval (TTI), the number of symbols per TTI, a radio frame configuration, specific filtering processing performed by a transceiver in a frequency domain, and a specific windowing processing performed by the transceiver in a time domain.

A slot may be constituted by one or a plurality of symbols in the time domain (orthogonal frequency division multiplexing (OFDM) symbols, single carrier frequency division multiple access (SC-FDMA) symbols, and the like). Further, the slot may be a time unit based on numerology.

The slot may include a plurality of mini slots. Each mini slot may include one or a plurality of symbols in the time domain. Further, the mini slot may be referred to as a subslot. Each mini slot may include fewer symbols than a slot. A PDSCH (or PUSCH) transmitted in a time unit larger than a mini slot may be referred to as PDSCH (PUSCH) mapping type A. A PDSCH (or PUSCH) transmitted using a mini slot may be referred to as PDSCH (PUSCH) mapping type B.

A radio frame, a subframe, a slot, a mini slot and a symbol all represent the time unit in signal communication. A radio frame, a subframe, a slot, a mini slot and a symbol may be each called by other applicable names. Note that time units such as a frame, a subframe, a slot, a mini slot, and a symbol in the present disclosure may be replaced with each other.

For example, one subframe may be referred to as TTI, a plurality of contiguous subframes may be referred to as TTI, or one slot or one mini slot may be referred to as TTI. That is, at least one of the subframe and TTI may be a subframe (1 ms) in the existing LTE, may be a period shorter than 1 ms (e.g., one to thirteen symbols), or may be a period longer than 1 ms. Note that the unit to represent the TTI may be referred to as a slot, a mini slot or the like, instead of a subframe.

Here, a TTI refers to the minimum time unit of scheduling in radio communication, for example. For example, in the LTE system, a base station performs scheduling to allocate radio resources (a frequency bandwidth and transmission power that can be used in each user terminal and the like) to each user terminal in TTI units. Note that the definition of TTIs is not limited to this.

The TTI may be the transmission time unit of channelencoded data packets (transport blocks), code blocks, codewords, or the like, or may be the unit of processing in scheduling, link adaptation, or the like. Note that, when the TTI is given, a time interval (for example, the number of symbols) to which the transport block, code block, codeword, or the like is actually mapped may be shorter than the TTI.

Note that, when one slot or one mini slot is referred to as a TTI, one or more TTIs (that is, one or more slots or one or more mini slots) may be the minimum time unit of scheduling. Further, the number of slots (the number of mini slots) constituting the minimum time unit of scheduling may be controlled.

A TTI having a time length of 1 ms may be referred to as a usual TTI (TTI in 3GPP Rel. 8 to 12), a normal TTI, a long TTI, a usual subframe, a normal subframe, a long subframe, a slot, and the like. A TTI that is shorter than the usual TTI may be referred to as a shortened TTI, a short TTI, a partial TTI (or fractional TTI), a shortened subframe, a short subframe, a mini slot, a subslot, a slot, and the like.

Note that a long TTI (for example, a usual TTI, a subframe, etc.) may be replaced with a TTI having a time duration exceeding 1 ms, and a short TTI (for example, a shortened TTI) may be replaced with a TTI having a TTI duration less than the TTI duration of a long TTI and not less than 1 ms.

A resource block (RB) is the unit of resource allocation in the time domain and the frequency domain, and may include one or a plurality of contiguous subcarriers in the frequency domain. The number of subcarriers included in the RB may be the same regardless of the numerology, and may be twelve, for example. The number of subcarriers included in the RB may be determined based on the numerology.

Further, the RB may include one or a plurality of symbols in the time domain, and may have a length of one slot, one mini slot, one subframe, or one TTI. One TTI, one subframe, and the like each may be constituted by one or a plurality of resource blocks.

Note that one or a plurality of RBs may be referred to as a physical resource block (physical RB (PRB)), a sub-carrier group (SCG), a resource element group (REG), a PRB pair, an RB pair, and the like.

Furthermore, a resource block may be constituted by one or a plurality of resource elements (REs). For example, one RE may be a radio resource domain of one subcarrier and one symbol.

A bandwidth part (BWP) (which may be referred to as a partial bandwidth or the like) may represent a subset of contiguous common resource blocks (RBs) for a given numerology in a certain carrier. Here, the common RB may be specified by the index of the RB based on a common reference point of the carrier. The PRB may be defined in a given BWP and be numbered within the BWP.

The BWP may include BWP for UL (UL BWP) and BWP for DL (DL BWP). For the UE, one or a plurality of BWPs may be configured within one carrier.

At least one of the configured BWPs may be active, and it may not be assumed that the UE transmits and receives a given signal/channel outside the active BWP. Note that a "cell", a "carrier", or the like in the present disclosure may be replaced with the "BWP".

Note that the structures of radio frames, subframes, slots, mini slots, symbols and the like described above are merely examples. For example, configurations such as the number of subframes included in a radio frame, the number of slots per subframe or radio frame, the number of mini slots included in a slot, the number of symbols and RBs included in a slot or a mini slot, the number of subcarriers included in an RB, the number of symbols in a TTI, the symbol duration, the length of cyclic prefix (CP), and the like can be variously changed.

Further, the information, parameters, and the like described in the present disclosure may be represented using absolute values or relative values with respect to given values, or may be represented using other corresponding information. For example, a radio resource may be specified by a given index.

The names used for parameters and the like in the present disclosure are in no respect limiting. Furthermore, any mathematical expression or the like that uses these parameters may differ from those explicitly disclosed in the present disclosure. Since various channels (PUCCH, PDCCH, and the like) and information elements can be identified by any suitable names, various names assigned to these various channels and information elements are not restrictive names in any respect.

The information, signals, and the like described in the present disclosure may be represented by using any of a variety of different technologies. For example, data, instructions, commands, information, signals, bits, symbols and chips, all of which may be referenced throughout the herein-contained description, may be represented by voltages, currents, electromagnetic waves, magnetic fields or particles, optical fields or photons, or any combination of these.

Further, information, signals, and the like can be output in at least one of a direction from higher layers to lower layers and a direction from lower layers to higher layers. Information, signals and so on may be input and output via a plurality of network nodes.

The information, signals and so on that are input and/or output may be stored in a specific location (for example, in a memory), or may be managed in a control table. The information, signal, and the like to be input and/or output can be overwritten, updated or appended. The output information, signal, and the like may be deleted. The information, signals and so on that are input may be transmitted to other pieces of apparatus.

Notification of information may be performed not only by using the aspects/embodiments described in the present disclosure but also using another method. For example, notification of information in the present disclosure may be performed by using physical layer signaling (for example, downlink control information (DCI), uplink control information (UCI)), higher layer signaling (for example, radio resource control (RRC) signaling, broadcast information (master information block (MIB), system information block (SIB), or the like), medium access control (MAC) signaling), another signal, or a combination thereof.

Note that physical layer signaling may be referred to as Layer 1/Layer 2 (L1/L2) control information (L1/L2 control signals), L1 control information (L1 control signal), or the like. Further, the RRC signaling may be referred to as an RRC message, and may be, for example, an RRC connection setup message, an RRC connection reconfiguration message, and the like. Further, a notification of MAC signaling may be given using, for example, MAC control elements (MAC control elements (CEs)).

Further, a notification of given information (for example, notification of "being X") is not limited to explicit notification but may be performed implicitly (for example, by not performing notification of the given information or by performing notification of another piece of information).

A determination may be made in a value represented by one bit (0 or 1), may be made in a Boolean value that represents true or false, or may be made by comparing numerical values (e.g., comparison against a given value).

Regardless of whether software is referred to as software, firmware, middleware, microcode, or hardware description language, or referred to by other names, this should be interpreted broadly, to mean an instruction, an instruction set, a code, a code segment, a program code, a program, a subprogram, a software module, an application, a software application, a software package, a routine, a subroutine, an object, an executable file, an execution thread, a procedure, a function, and the like.

Further, software, instruction, information, and the like may be transmitted/received via a transmission medium. For example, when software is transmitted from a website, a server, or another remote source by using at least one of a wired technology (coaxial cable, optical fiber cable, twisted pair, digital subscriber line (DSL), or the like) and a wireless technology (infrared rays, microwaves, and the like), at least one of the wired technology and the wireless technology is included within the definition of a transmission medium.

The terms "system" and "network" used in the present disclosure can be used interchangeably. The "network" may mean an apparatus (for example, a base station) included in the network.

In the present disclosure, terms such as "precoding", "precoder", "weight (precoding weight)", "quasi-co-location (QCL)", "transmission configuration indication state (TCI state)", "spatial relation", "spatial domain filter", "transmission power", "phase rotation", "antenna port", "antenna port group", "layer", "number of layers", "rank", "resource", "resource set", "resource group", "beam", "beam width", "beam angle", "antenna", "antenna element", and "panel" can be interchangeably used.

In the present disclosure, the terms such as "base station (BS)", "radio base station", "fixed station", "NodeB", "eNodeB (eNB)", "gNodeB (gNB)", "access point", "transmission point (TP)", "reception point (RP)", "transmission/reception point (TRP)", "panel", "cell", "sector", "cell group", "carrier", and "component carrier", can be used interchangeably. The base station may be referred to as a term such as a macro cell, a small cell, a femto cell, or a pico cell.

The base station can accommodate one or a plurality of (for example, three) cells. When a base station accommodates a plurality of cells, the entire coverage area of the base station can be partitioned into a plurality of smaller areas, and each smaller area can provide communication service through base station subsystems (e.g., indoor small base stations (remote radio heads (RRHs))). The term "cell" or "sector" refers to a part or the whole of a coverage area of at least one of a base station and a base station subsystem that perform a communication service in this coverage.

In the present disclosure, the terms such as "mobile station (MS)", "user terminal", "user equipment (UE)", and "terminal" can be interchangeably used.

The mobile station may be referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or other appropriate terms.

At least one of the base station and the mobile station may be referred to as a transmission apparatus, a reception apparatus, a radio communication apparatus, and the like. Note that at least one of the base station and the mobile station may be a device mounted on a moving object, a moving object itself, and the like. The moving object may be a transportation (for example, a car, an airplane and the like), an unmanned moving object (for example, a drone, an autonomous car, and the like), or a (manned or unmanned) robot. Note that at least one of the base station and the mobile station also includes a device that does not necessarily move during a communication operation. For example, at least one of the base station and the mobile station may be an Internet of Things (IoT) device such as a sensor.

Further, the base station in the present disclosure may be replaced with the user terminal. For example, each aspect/embodiment of the present disclosure may be applied to a configuration in which communication between the base station and the user terminal is replaced with communication among a plurality of user terminals (which may be referred to as, for example, device-to-device (D2D), vehicle-to-everything (V2X), and the like). In the case, the user terminal 20 may have the function of the above-described base station 10. In addition, terms such as "uplink" and "downlink" may be replaced with terms corresponding to communication between terminals (for example, "side"). For example, the uplink channel, the downlink channel, and the like may be replaced with a side channel.

Similarly, the user terminal in the present disclosure may be replaced with the base station. In this case, the base station 10 may be configured to have the above-described functions of the user terminal 20.

In the present disclosure, the operation performed by the base station may be performed by an upper node thereof in some cases. In a network including one or a plurality of network nodes with base stations, it is clear that various operations performed for communication with a terminal can be performed by a base station, one or a plurality of network nodes (examples of which include but are not limited to mobility management entity (MME) and serving-gateway (S-GW)) other than the base station), or a combination thereof.

Each aspect/embodiment described in the present disclosure may be used alone, used in combination, or switched in association with execution. Further, the order of processing procedures, sequences, flowcharts, and the like of the aspects/embodiments described in the present disclosure may be re-ordered as long as there is no inconsistency. For example, regarding the methods described in the present disclosure, elements of various steps are presented using an illustrative order, and are not limited to the presented specific order.

Each aspect/embodiment described in the present disclosure may be applied to a system using long term evolution (LTE), LTE-advanced (LTE-A), LTE-beyond (LTE-B), SUPER 3G, IMT-Advanced, 4th generation mobile communication system (4G), 5th generation mobile communication system (5G), future radio access (FRA), new radio access technology (RAT), new radio (NR), new radio access (NX), future generation radio access (FX), global system for mobile communications (GSM (registered trademark)), CDMA 2000, ultra mobile broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), or another appropriate radio communication method, a next generation system expanded based on these, and the like. Further, a plurality of systems may be combined (for example, a combination of LTE or LTE-A and 5G) and applied.

The phrase "based on" used in the present disclosure does not mean "based only on", unless otherwise specified. In other words, the phrase "based on" means both "based only on" and "based at least on."

Any reference to an element using designations such as "first" and "second" used in the present disclosure does not generally limit the amount or order of these elements. These designations may be used in the present disclosure only for convenience, as a method for distinguishing between two or more elements. In this way, reference to the first and second elements does not imply that only two elements may be employed, or that the first element must precede the second element in some way.

The term "determining" used in the present disclosure may include a wide variety of operations. For example, "determining" may be regarded as "determining" of judging, calculating, computing, processing, deriving, investigating, looking up, search, inquiry (for example, looking up in a table, database, or another data structure), ascertaining, and the like.

Furthermore, "determining" may be regarded as "determining" of receiving (for example, receiving of information), transmitting (for example, transmitting of information), input, output, accessing (for example, accessing to data in a memory), and the like.

Further, "determining" may be regarded as "determining" of resolving, selecting, choosing, establishing, comparing, and the like. In other words, "determining" may be regarded as "determining" of a given operation.

Further, "determining" may be replaced with "assuming", "expecting", "considering", and the like.

The "maximum transmission power" described in the present disclosure may mean a maximum value of transmission power, the nominal UE maximum transmit power, or the rated UE maximum transmit power.

The terms "connected" and "coupled", or any variation thereof used in the present disclosure mean all direct or indirect connections or coupling between two or more elements, and can include the presence of one or more intermediate elements between two elements that are "connected" or "coupled" to each other. The coupling or connection between the elements may be physical, logical or a combination of these. For example, "connection" may be replaced with "access".

In the present disclosure, when two elements are connected, these elements may be considered to be "connected" or "coupled" to each other by using one or more electrical wires, cables, printed electrical connections, and the like, and by using, as some non-limiting and non-inclusive examples, electromagnetic energy having a wavelength in the radio frequency domain, microwave domain, and optical (both visible and invisible) domain, and the like.

In the present disclosure, the phrase "A and B are different" may mean "A and B are different from each other". Note that the phrase may mean that "A and B are different from C". The terms such as "separate", "coupled", and the like may be interpreted similarly to "different".

When "include", "including", and variations thereof are used in the present disclosure, these terms are intended to be inclusive similarly to the term "comprising". Furthermore, the term "or" as used in the present disclosure is intended to be not an exclusive-OR.

In the present disclosure, for example, when translations add articles, such as a, an, and the in English, the present disclosure may include that the noun that follows these articles is in the plural.

Now, although the invention according to the present disclosure has been described in detail above, it is obvious to a person skilled in the art that the invention according to the present disclosure is by no means limited to the embodiments described in the present disclosure. The invention according to the present disclosure can be embodied with various corrections and in various modified aspects, without departing from the spirit and scope of the invention defined on the basis of the description of claims. Therefore, the description in the present disclosure is provided for the purpose of describing examples, and thus, should by no means be construed to limit the invention according to the present disclosure in any way.

## Claims

1. A terminal comprising:
a reception section that receives at least one configuration for measurement and reporting of channel state information (CSI) for a plurality of transmission/reception points; and
a control section that performs measurement and reporting of the CSI on the basis of the configuration.

2. The terminal according to claim 1, wherein
each of the at least one configuration includes a plurality of groups of channel measurement resources and interference measurement resources, and
each of the plurality of groups includes an index associated with the transmission/reception point.

3. The terminal according to claim 1 or 2, wherein
the at least one configuration is a plurality of configurations, and
at least one of a channel measurement resource and an interference measurement resource is different among the plurality of configurations.

4. The terminal according to claim 1 or 2, wherein
the at least one configuration is one configuration,
each of the plurality of groups includes a plurality of combinations of channel measurement resources and interference measurement resources, and
at least one of the channel measurement resource and the interference measurement resource is different among the plurality of combinations.

5. A radio communication method of a terminal, the method comprising:
receiving at least one configuration for measurement and reporting of channel state information (CSI) for a plurality of transmission/reception points; and
performing measurement and reporting of the CSI on the basis of the configuration.

6. A base station comprising:
a transmission section that transmits at least one configuration for measurement and reporting of channel state information (CSI) for a plurality of transmission/reception points; and
a control section that acquires a CSI report based on the configuration.
